# EUROPEAN PATENT SPECIFICATION

(11) **EP 1 781 729 B1**
(45) Date of publication and mention of the grant of the patent: **23.07.2008**
(21) Application number: 04739362.4
(22) Date of filing: 26.05.2004
(51) Int. Cl.: C08K 3/34, B60C 1/00

(54) **TIRE COMPRISING AN ELASTOMERIC POLYMER INCLUDING A FUNCTIONAL GROUP AND CROSSLINKABLE ELASTOMERIC COMPOSITION**
REIFEN, UMFASSEND EIN ELASTOMERES POLYMER MIT EINER FUNKTIONELLEN GRUPPE, UND VERNETZBARE ELASTOMERE ZUSAMMENSETZUNG
PNEU COMPRENANT UN POLYMERE ELASTOMERE RENFERMANT UN GROUPE FONCTIONNEL ET UNE COMPOSITION ELASTOMERE RETICULABLE

(43) Date of publication of application: 09.05.2007
(73) Proprietor: PIRELLI TYRE S.p.A., 20126 Milano (IT)
(72) Inventor: GALIMBERTI, Maurizio, 20126 Milano (IT); CAPRIO, Michela, 20126 Milano (IT); FINO, Luigi, 20126 Milano (IT); GIANNINI, Luca, 20126 Milano (IT); GRASSI, Lisa, 20126 Milano (IT); TESTI, Stefano, 20126 Milano (IT); PUCCI, Elena, 55100 San Concordio (IT)
(74) Representative: Bottero, Claudio
(86) International application number: PCT/EP2004/005656
(87) International publication number: WO 2005/118695

(56) References cited:
- EP-A- 1 344 796
- WO-A-20/04005387
- WO-A-20/04005388
- US-A1- 2003 144 401

## Description

### Background of the invention

The present invention relates to a tire and to a crosslinkable elastomeric composition.

More in particular the present invention relates to a tire including at least one structural element obtained by crosslinking a crosslinkable elastomeric composition comprising at least one elastomeric polymer including at least one functional group and at least one layered inorganic material.

### Known art

In the rubber industry, in particular that of tires for vehicle wheels, it is known practice to add organic fibres such as, for example, polyamide fibres (in particular, aromatic polyamide fibres known as "aramide fibres"), polyester fibres or polyolefin fibres, to elastomeric compositions, in order to improve their mechanical properties (both static and dynamic).

For example, European Patent Application EP 691,218 relates to a tire component for a pneumatic tire comprising a reinforced vulcanizable composition, said composition including a vulcanizable elastomeric matrix material having dispersed therein an effective reinforcing amount of a partially oriented fibres having a modulus of less than 10 GPa, preferably less than 6 GPa. As an alternative embodiment, a tire component may be reinforced with a mixture of a partially oriented fibres and fibrillated pulp fibres (e.g. Kevlar^{®} pulp). The partially oriented fibres may comprise as specific examples, polyamides, polyesters, polyolefins, and a polymer selected from the group consisting of nylon 6, nylon 46, nylon 66, polyethylene, polypropylene, polyethylene-terephthalate (PET). The above mentioned reinforced vulcanizable composition is said to have an improved stiffness without negatively affecting its remaining properties such as, for example, hysteresis and fatigue endurance.

International Patent Application WO 00/24596 in the name of the Applicant relates to a tire with an elastomeric intermediate layer disposed between the tread band and the belted plies wherein the elastomeric intermediate layer is made of a fibre-reinforced material. Said elastomeric intermediate layer may be reinforced with short reinforcing fibres such as, for example, aramide fibres (i.e. Kevlar^{©} pulp) to improve its modulus of elasticity, among other mechanical properties.

The mechanical properties of the elastomeric compositions may be also improved by increasing crosslinking density of the elastomeric composition by using a large amount of sulphur; or by using a large amount of carbon black, or a very fine and structured carbon black which has a high reinforcing capacity.

However, the above ways of improving mechanical properties may lead to a number of drawbacks.

For example, the addition of organic fibres due to their poor dispersion, may impair the processability of the uncured elastomeric compositions and therefore the quality of the finished product, both in term of mechanical properties and of surface appearance. This may cause a reduction in their tear resistance and detachments from the other elastomeric compositions present in the tire both during manufacturing process or during use of the tire. Moreover, the organic fibres have a remarkable anisotropic behaviour, namely they substantially orient in the direction of the shear forces exerted during extrusion and calendering of the uncured elastomeric composition to form a layer of elastomeric material (usually named "calendering direction"), so as to give to the tire essentially a longitudinal reinforcement, namely a reinforcement essentially in the circumferential direction of the tire.

On the other hand, the use of a large amount of sulphur may cause remarkable reversion phenomena, which result in modifications of the tire performances during use. On the other side, it is known that carbon black gives pronounced hysteresis properties to the elastomeric composition, namely an increase in the dissipated heat under dynamic conditions, which results in an increase in the rolling resistance of the tire. In addition, a large amount of carbon black remarkably increases viscosity of the non-crosslinked elastomeric composition and, consequently, has a negative impact on its processability and extrudability.

Therefore, other ways have been found to improve mechanical properties of the elastomeric compositions.

For example, European Patent Application EP 1,193,085 relates to a tire with a rubber/cord laminate, sidewall insert and apex including a rubber composition comprising, based upon parts by weight of an ingredient per 100 parts by weight elastomer (phr):
(A) 100 phr of at least one diene-base elastomer;
(B) 30 phr to 100 phr of particulate reinforcement dispersed within said elastomer(s) selected from intercalated smectite, preferably montmorillonite, clay particles, carbon black, synthetic amorphous silica and silica treated carbon black, comprised of:
   (1) 1 phr to 10 phr of said intercalated, layered, thin, substantially two dimensional smectite, preferably montmorillonite, clay particles of which at least a portion thereof is in a form of thin, flat, substantially two dimensional exfoliated platelets derived from said intercalated clay; and
   (2) 20 phr to 99 phr of at least one additional reinforcing filler comprised of carbon black, synthetic amorphous silica and silica treated carbon black.

The abovementioned rubber composition is said to have improved stiffness and tensile modulus with only a small increase of Tandelta values.

Japanese Patent Application JP 2003/221473 relates to a rubber composition wherein a compound containing maleic anhydride groups and a lamellar clay mineral which has been treated with a primary and/or secondary ammonium ions is mixed with a solid rubber. Compounds containing maleic anhydride groups useful for said purpose are maleic anhydride or maleinized liquid rubbers having a molecular weight ≤ 30,000. Solid rubbers useful for said purpose are natural rubber, synthetic rubber, thermoplastic elastomers, or mixtures thereof. The abovementioned lamellar clay mineral is said to be uniformly and finely dispersed in said rubber composition.

United States Patent Application US 2003/0191224 relates to an organically modified layered clay ionically bonded with an organic compound having an ammonium group and an amino group and to an organic polymer composition containing the same. Said organic polymer composition comprises (i) an organic polymer, (ii) said organically modified layered clay, and (iii) a low molecular weight organic polymer having a weight average molecular weight of less than 50,000 and/or a high molecular weight organic polymer having a weight average molecular weight of 50,000 or more, each having a functional group capable of reacting with an amino group. Examples of functional groups capable of reacting with an amino group are: acid anhydride group, epoxy group, halogen group, carboxyl group, acyl group, methacryl group, isocyanate group, ester group. The abovementioned organic polymer composition, having good abrasion resistance and air barrier properties, is said to be useful, for example, for making tread, carcass or innerliner, of a pneumatic tire.

United States Patent Application US 2003/0004250 relates to a light weight rubber composition comprising (1) an amino group containing rubbery polymer, wherein said amino group containing rubbery polymer contains from about 0.1 weight percent to about 20 weight percent of a monomer containing an amino group, and (2) from about 0.1 phr to about 25 phr of a 2:1 layered silicate clay. The abovementioned rubber composition, having improved tensile strenght and elongation at break, is said to be useful in the manufacturing of rubber articles such as power transmission belts and tires, in particular tire tread band and sidewalls.

United States Patent Application US 2003/0144401 relates to nanocomposites comprising a functionalized elastomeric polymer which contains a particulate dispersion therein of an intercalated and at least partially exfoliated, swellable clay such as, for example, montmorillonite clay. Said clay may be pre-intercalated and thereafter blended with, or intercalated and partially exfoliated in situ within, a functionalized elastomer in an aqueous medium, wherein said functionalized elastomer contains at least one functional group selected from acid, acid salts, anhydride, and protonated amine-modified epoxy groups. Said nanocomposite is further blended with at least one additional diene-based elastomer. Articles of manufacture, including industrial belts and tires, having at least one component including such nanocomposite where such component may be a coating thereon or other integral component, are also disclosed. Such tire component may be, for example, a tire tread band, a tire sidewall and/or a tire innerliner.

International Patent Application WO 2004/005388 relates to a nanocomposite comprising a clay and an elastomer comprising C₂ to C₁₀ olefin derived units, wherein said elastomer also comprises functionalized monomer units pendant to the elastomer. Preferably, the elastomer is selected from poly(isobutylene-co-p-alkylstyrene) elastomers and poly(isobutylene-co-isoprene) elastomers, which are functionalized by reacting free radical generating agents and unsaturated carboxylic acids, unsaturated esters, unsaturated imides, with the elastomer. The abovementioned nanocomposite is said to have improved air barrier properties and to be particularly useful for tire innerliner and innertubes.

The Applicant has noticed that, in the case of elastomeric compositions which usually require a high reinforcement such as those used, for example, for making bead fillers, sidewall inserts, tread underlayers, tread base, the use of a layered material as reinforcing filler may not be sufficient to achieve the desired properties.

In order to achieve more reinforcement, a large amount of layered material may be used. However, some drawbacks may be encountered such as, for example, a decrease in tearing resistance and a premature crosslinking of the elastomeric compositions (scorching phenomena). Moreover, a scarce adhesion to other elastomeric structural elements of the tire is observed, and consequently detachments in the tire structure may occur both during manufacturing and during use.

### Summary of the invention

The Applicant has now found that it is possible to obtain crosslinkable elastomeric compositions that may be advantageously used in the production of crosslinked manufactured products, in particular in the manufacturing of tires, more in particular in the manufacturing of inner structural elements of a tire, by using at least one elastomeric polymer including at least one functional group selected from carboxylic groups, carboxylate groups, anhydride groups, ester groups and at least one layered inorganic material.

The crosslinked elastomeric compositions show improved mechanical properties, both static (in particular tensile modulus) and dynamic (in particular, elastic modulus). Moreover, an improved hardness is achieved. Said improvements are obtained without negatively affecting both the tear resistance and the hysteresis properties of the crosslinked elastomeric compositions. In addition, the viscosity values of said crosslinkable elastomeric compositions are not negatively affected allowing a good processability and extrudability of the same.

According to a first aspect, the present invention relates to a tire comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one structural element selected from bead filler, sidewall insert, tread underlayer, tread base, obtained by crosslinking a crosslinkable elastomeric composition comprising:
   (a) a crosslinkable elastomeric base comprising at least 30 phr, preferably from 50 phr to 100 phr, of at least one elastomeric polymer including from 0.05% by weight to 10% by weight, preferably from 0.1% by weigth to 5% by weight, with respect to the total weight of the elastomeric polymer, of at least one functional group selected from carboxylic groups, carboxylate groups, anhydride groups, ester groups;
   (b) from 2 phr to 50 phr, preferably from 5 phr to 30 phr, of at least one layered inorganic material.

According to a further preferred embodiment, said functional group is grafted onto the elastomeric polymer.

The amount of functional groups present on the elastomeric polymer may be determined according to known techniques such as, for example, by Infrared ATR-spectroscopy analysis: further details about said techniques will be reported in the examples which follow.

Preferably, the crosslinkable elastomeric base (a) further comprises at least one second elastomeric polymer in an amount not higher than 70 phr, preferably of from 0 phr to 50 phr.

For the purpose of the present description and of the claims which follow, the term "crosslinkable elastomeric base" means any polymer or polymers mixture, either natural or synthetic, capable of assuming all the chemical-physical and mechanical properties typical of elastomeric polymers as a result of crosslinking with system known in the art such as, for example, a sulphur-based system or a peroxide-based system.

For the purposes of the present description and of the claims which follow, the term "phr" means the parts by weight of a given component of the elastomeric material per 100 parts by weight of the polymeric base.

According to a further preferred embodiment, said sidewall insert extends radially from a position corresponding to the bead structure to a position corresponding to a tread lateral edge. Said sidewall insert is usually used in the case of extended mobility tires such as, for example, run flat tires.

According to a further preferred embodiment, said tread underlayer is a layer of crosslinked elastomeric composition applied in a radially internal position with respect to said tread band.

According to a further preferred embodiment said tread band is of cap and base construction and comprises a radially inner layer or tread base and a radially outer layer or tread cap. Preferably, said radially inner layer or tread base has a thickness of at least about 10%, preferably between about 20% and about 70%, with respect to the total thickness of the tread band.

Preferably, said structural element has a tensile modulus at 100% elongation (100% Modulus) not lower than 3 MPa, more preferably of from 4.5 MPa to 14 MPa.

Preferably, said structural element has a dynamic elastic modulus (E'), measured at 23°C, not lower than 9 MPa, more preferably of from 11 MPa to 50 MPa.

Preferably, said structural element has a dynamic elastic modulus (E'), measured at 70°C, not lower than 6 MPa, more preferably of from 9 MPa to 40 MPa.

Preferably, said structural element has a IRHD hardness, measured at 23°C, not lower than 65, more preferably of from 70 to 95.

The tensile modulus may be measured according to Standard ISO 37:1994. The dynamic elastic modulus (E') may be measured using an Instron dynamic device in the traction-compression mode. The IRHD hardness may be measured according to Standard ISO 48:1994. Further details regarding the above measurement methods will be given in the examples which follow.

According to one preferred embodiment, said crosslinkable elastomeric composition further comprises from 0 phr to 120 phr, preferably from 20 phr to 90 phr, of at least one carbon black reinforcing filler.

According to a further aspect, the present invention relates to the use of a crosslinkable elastomeric composition comprising:
(a) a crosslinkable elastomeric base comprising at least about 30 phr, preferably from 50 phr to 100 phr, of at least one elastomeric polymer including from 0.05% by weight to 10% by weight, preferably from 0.1 % by weigth to 5% by weight, with respect to the total weight of the elastomeric polymer, of at least one functional group selected from carboxylic groups, carboxylates groups, anhydride groups, ester groups;
(b) from 2 phr to 50 phr, preferably from 5 phr to 30 phr, of at least one layered inorganic material;
(c) from 0.1 phr to 120 phr, preferably from 20 phr to 90 phr, of at least one carbon black reinforcing filler; for the manufacture of a structural element of a tire selected from bead fillen, side wall insert, tread under lager and tread base.

Said layered inorganic material may be added to the crosslinkable elastomeric composition as such or, alternatively, after being treated with at least one compatibilizing agent. Said compatibilizing agent will be specifically disclosed hereinbelow.

According to a further aspect, the present invention relates to a crosslinked manufactured article obtained by crosslinking a crosslinkable elastomeric composition above disclosed.

According to a further preferred embodiment, said crosslinkable elastomeric composition further comprises (d) at least one silane coupling agent.

According to a further preferred embodiment, said elastomeric polymer including at least one functional group has a weight average molecular weight (M_{w}) not lower than about 80,000, preferably of from about 100,000 to about 1,000,000. Said weight average molecular weight (M_{w}) may be determined according to known techniques such as, for example, by gel permeation cromatography (GPC).

According to a further preferred embodiment, said elastomeric polymer including at least one functional group has a Mooney viscosity ML(1+4) not lower than 40, preferably of from 50 to 110. Said Mooney viscosity ML(1+4) may be determined according to Standard ASTM D1646-04 (at 100°C, unmassed).

The functional group may be introduced into the elastomeric polymer by means of processes known in the art such as, for example, during the production of the elastomeric polymer by co-polymerization with at least one corresponding functionalized monomer containing at least one ethylenic unsaturation; or by subsequent modification of the elastomeric polymer by grafting said at least one functionalized monomer in the presence of a free radical initiator (for example, an organic peroxide).

Preferably, said functional group may be introduced into the elastomeric polymer by means of a process comprising:
- feeding at least one elastomeric polymer and at least one functionalized monomer containing at least one ethylenic unsaturation into at least one extruder comprising a housing, at least one screw rotatably mounted in said housing including at least one feed opening and a discharge opening;
- mixing and softening said mixture so as to obtain an elastomeric polymer including at least one functional group;
- discharging the elastomeric polymer obtained in the above step through the discharge opening.

Preferably, said process may be carried out at a temperature of from about 20°C to about 300°C, more preferably of from about 40°C to about 260°C.

Preferably, said process may be carried out for a time of from about 10 seconds to about 3 minutes, more preferably of from about 20 seconds to about 2 minutes.

Preferably, said extruder is a co-rotating twin-screw extruder.

Said elastomeric polymer including at least one functional group may be obtained in the form of a continuous ribbon or, alternatively, in the form of a subdivided product.

Functionalized monomers which may be advantageously used include, for example, monocarboxylic or dicarboxylic acids containing at least one ethylenic unsaturation or derivatives thereof, in particular salts, anhydride or esters.

Examples of monocarboxylic or dicarboxylic acids containing at least one ethylenic unsaturation or derivatives thereof are: maleic acid, fumaric acid, citraconic acid, itaconic acid, acrylic acid, methacrylic acid, and salts, anhydrides or esters derived therefrom, or mixtures thereof. Maleic anhydride is particularly preferred.

According to one preferred embodiment, the elastomeric polymer which may be utilized in the production of the elastomeric polymer including at least one functional group, may be selected from those commonly used in sulphur-crosslinkable elastomeric compositions, that are particularly suitable for producing tires, that is to say from elastomeric polymers or copolymers with an unsaturated chain having a glass transition temperature (T_{g}) generally below about 20°C, preferably in the range of from about 0°C to about 10°C. These polymers or copolymers may be of natural origin or may be obtained by solution polymerization, emulsion polymerization or gas-phase polymerization of one or more conjugated diolefins, optionally blended with at least one comonomer selected from monovinylarenes in an amount of not more than about 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Preferably, the elastomeric polymer may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixture thereof.

Alternatively, elastomeric polymer of one or more monoolefins with an olefinic comonomer and at least one diene, or derivatives thereof, may be used. The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbomene, vinylnorbornene, or mixtures thereof. Among these, the following are particularly preferred: ethylene/propylene/diene copolymers (EPDM); polyisobutene; butyl rubbers; halobutyl rubbers, in particular chlorobutyl or bromobutyl rubbers; or mixtures thereof.

Elastomeric polymers functionalized by reaction with suitable terminating agents or coupling agents may also be used. In particular, elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451,604, or patents US 4,742,124 and US 4,550,142).

According to one preferred embodiment, said elastomeric polymer including at least one functional group is pre-mixed with the layered inorganic material in order to obtain a masterbatch.

Preferably, said masterbatch may be obtained by means of a process comprising the following steps:
- feeding at least one elastomeric polymer including at least one functional group and at least one layered inorganic material into at least one extruder comprising a housing, at least one screw rotatably mounted in said housing including at least one feed opening and a discharge opening;
- mixing and softening said mixture so as to obtain a masterbatch;
- discharching the obtained masterbatch through a discharge opening.

Alternatively, said masterbatch may be obtained by means of a process comprising the following steps:
- feeding at least one elastomeric polymer, at least one functionalized monomer containing at least one ethylenic unsaturation, and at least one layered inorganic material, into at least one extruder comprising a housing, at least one screw rotatably mounted in said housing including at least one feed opening and a discharge opening;
- mixing and softening said mixture so as to obtain a masterbatch;
- discharching the obtained masterbatch through a discharge opening.

Preferably, said extruder is a co-rotating twin-screw extruder.

Said masterbatch may be obtained in the form of a continuous ribbon or, alternatively, in the form of a subdivided product.

Preferably, said process may be carried out at a temperature of from about 20°C to about 240°C, more preferably of from about 40°C to about 220°C.

Preferably, said process may be carried out for a time of from about 10 seconds to about 5 minutes, more preferably of from about 20 seconds to about 3 minutes.

According to one preferred embodiment, the layered inorganic material (b) which may be used in the present invention may be selected, for example, from phyllosilicates such as: smectites, for example, montmorillonite, nontronite, beidellite, volkonskoite, laponite, hectorite, saponite, sauconite, magadite, kenyasite, stevensite; vermiculite; halloisite; sericite; aluminate oxides; hydrotalcite; or mixtures thereof. Montmorillonite is particularly preferred.

In order to render the layered inorganic materal (b) more compatible with the polymeric base (a) said layered inorganic material (b) may be treated with at laest one compatibilizing agent.

According to one preferred embodiment, said compatibilizing agent may be selected, for example, from the quaternary ammonium or phosphonium salts having general formula (I): 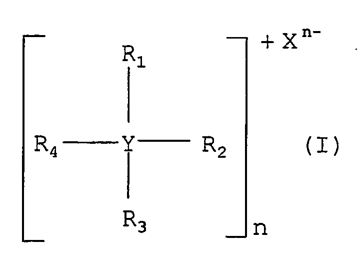 wherein:
- Y represents N or P;
- R₁, R₂, R₃ and R₄, which may be identical or different, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulphur;
- Xⁿ⁻ represents an anion such as the chlorine ion, the sulphate ion or the phosphate ion;
- n represents 1, 2 or 3.

The layered inorganic material may be treated with the compatibilizing agent before adding it to the elastomeric base. Alternatively, the layered inorganic material and the compatibilizing agent may be separately added to the elastomeric base.

The treatment of the layered inorganic material (b) with the compatibilizer may be carried out according to known methods such as, for example, by an ion exchange reaction between the layered inorganic material and the compatibilizer: further details are described, for example, in patents US 4,136,103, US 5,747,560, or US 5,952,093.

Example of layered inorganic material (b) which may be used according to the present invention and is available commercially is the product known by the name of Dellite^{®} 67G from Laviosa Chimica Mineraria S.p.A.

As disclosed above, the crosslinkable elastomeric base (a), may further comprises at least one second elastomeric polymer. Said elastomeric polymer may be selected from the elastomeric polymers or copolymers above reported or, alternatively, from the elastomeric polymers of one or more monoolefins with an olefinic comonomer or derivatives thereof. Among those, the preferred second elastomeric polymer is:
- cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof;
- ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

As disclosed above, said crosslinkable elastomeric composition may further comprise (c) at least one carbon black reinforcing filler.

According to one preferred embodiment, the carbon black reinforcing filler which may be used in the present invention may be selected from those having a surface area of not less than about 20 m²/g (determined by CTAB absorption as described in Standard ISO 6810:1995).

As disclosed above, said crosslinkable elastomeric composition may further comprise (d) at least one silane coupling agent.

According to one preferred embodiment, the silane coupling agent which may be used in the present invention may be selected from those having at least one hydrolizable silane group which may be identified, for example, by the following general formula (II):

(R)₃Si-CₙH₂ₙ-X (II)

wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, - (S)ₘCₙH₂ₙ-Si-(R)₃, or -S-COR, in which m and n are integers between 1 and 6 inclusive and the groups R are defined as above.

Among the silane coupling agents that are particularly preferred are bis(3-triethoxysilyl-propyl)tetrasulphide and bis(3-triethoxysilylpropyl)-disulphide. Said coupling agents may be used as such or as a suitable mixture with an inert filler (for example carbon black) so as to facilitate their incorporation into the crosslinkable elastomeric base (a).

According to one preferred embodiment, said silane coupling agent is present in the crosslinkable elastomeric composition in an amount of from 0 phr to 10 phr, preferably of from 0.5 phr to 5 phr.

At least one additional reinforcing filler may advantageously be added to the above reported crosslinkable elastomeric composition, in an amount generally of from 0 phr to 120 phr, preferably of from 20 phr to 90 phr. The reinforcing filler may be selected from those commonly used for crosslinked manufactured products, in particular for tires, such as, for example, silica, alumina, aluminosilicates, calcium carbonate, kaolin, or mixtures thereof.

The silica which may be used in the present invention may generally be a pyrogenic silica or, preferably, a precipitated silica, with a BET surface area (measured according to ISO standard 5794/1) of from about 50 m²/g to about 500 m²/g, preferably of from about 70 m²/g to about 200 m²/g.

When a reinforcing filler comprising silica is present, the crosslinkable elastomeric composition may advantageously incorporate a silane coupling agent capable of interacting with the silica and of linking it to the elastomeric polymer during the vulcanization. Examples of silane coupling agent which may be used have been already disclosed above.

The crosslinkable elastomeric composition above reported may be vulcanized according to known techniques, in particular with sulphur-based vulcanizing systems commonly used for elastomeric polymers. To this end, in the composition, after one or more stages of thermomechanical processing, a sulphur-based vulcanizing agent is incorporated together with vulcanization accelerators. In the final processing stage, the temperature is generally kept below about 150°C and preferably below about 130°C, so as to avoid any unwanted pre-crosslinking phenomena.

The vulcanizing agent most advantageously used is sulphur, or molecules containing sulphur (sulphur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected, for example, from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said elastomeric composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges from about 0 phr to about 70 phr, preferably from about 5 phr to about 30 phr.

The above reported crosslinkable elastomeric composition may be prepared by mixing together the crosslinkable elastomeric base and the layered inorganic material or a masterbatch thereof, with the reinforcing filler and with the other additives optionally present according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

### Brief description of the drawings

The present invention will now be illustrated in further detail by means of a number of illustrative embodiments, with reference to the attached Fig. 1-4:
- Fig. 1-4 are a view in cross section of a portion of a tire made according to the invention;
- Fig. 5 is a schematic diagram of a production plant for making a masterbatch according to the process of the present invention.

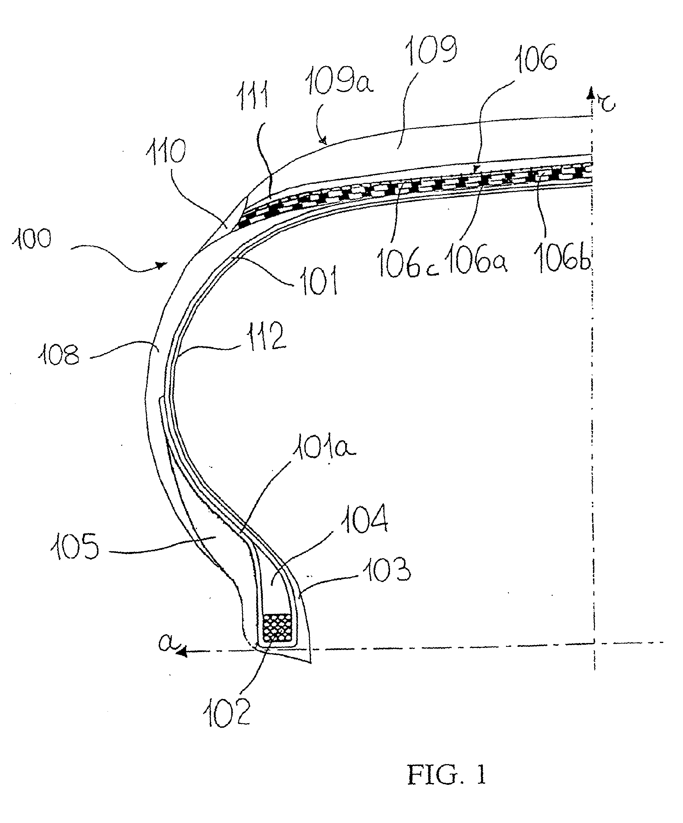

In the drawing figures, "a" indicates an axial direction and "r" indicates a radial direction. For simplicity, Fig. 1 shows only a portion of the tire, the remaining portion not represented being identical and symmetrically arranged with respect to the radial direction "r".

### Detailed description of preferred embodiments

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) can be replaced with at least one annular insert formed from rubberized wires arranged in concentric coils (not represented in Fig. 1) (see, for example, European patent applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) which may be made according to the present invention, wherein the bead core (102) is embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) which may be made according to the present invention, is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the-tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in a radially internal position relative to the carcass ply (101).

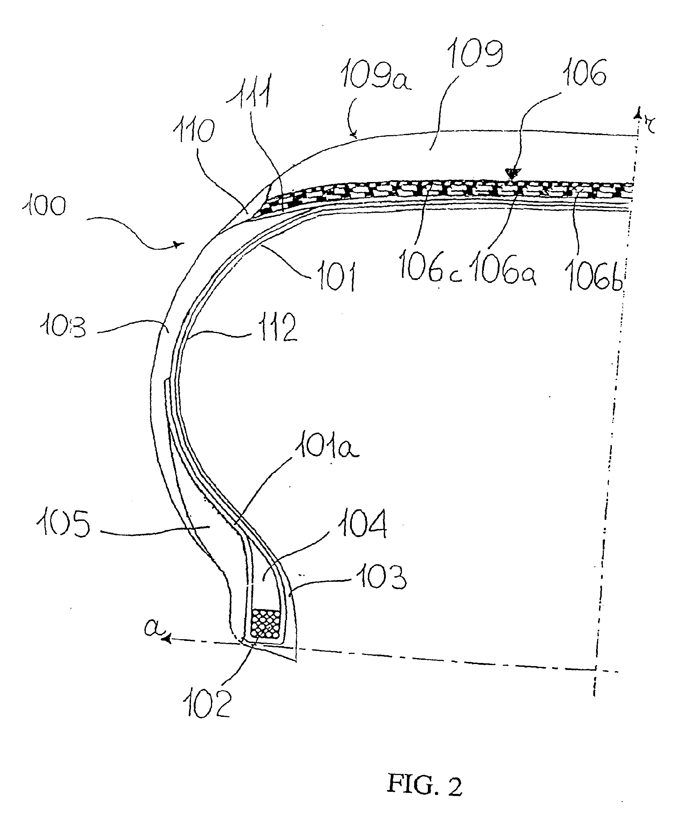

Fig. 2, shows a tire (100) having a structure as described in Fig. 1 where the tread underlayer (111) which may be made according to the present invention, is placed between the belt structure (106) and the carcass ply (101).

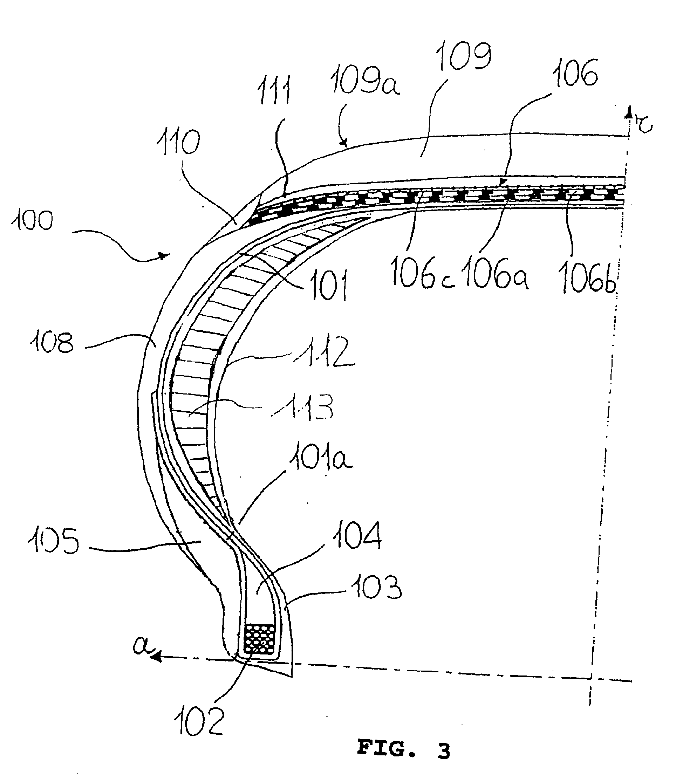

Fig. 3, shows a tire (100) having a structure as described in Fig. 1 where a sidewall insert (113) which may be made according to the present invention, which extends radially from a position corresponding to the bead structure to a position corresponding to a tread lateral edge, is placed in an axially internal position with respect to the carcass ply: for example, as represented in Fig. 3, said sidewall insert is placed between the carcass ply (101) and the liner (112). Alternatively, in the case in which more carcass plies are present, a sidewall insert (113) is placed between two of said carcass plies (not represented in Fig. 3.) Alternatively, a sidewall insert is placed beetween the carcass ply and the side wall (not represent in Fig. 3). More than one sidewall insert may be present as disclosed, for example, in US patent 5,238,040 or in EP patent 943,466.

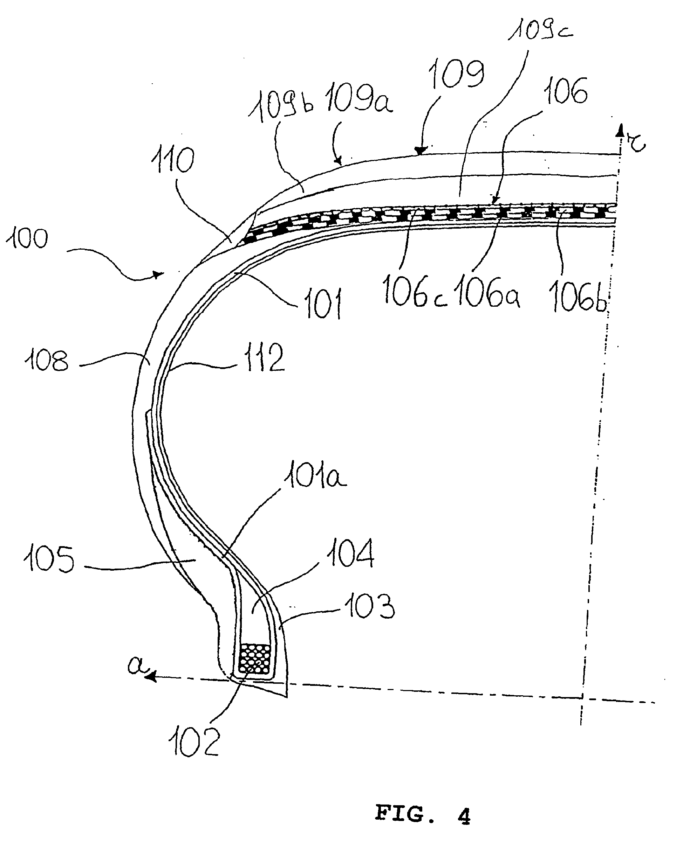

Fig. 4, shows a tire (100) having a structure as described in Fig. 1 where a tread band (109) is of cap and base construction. More in particular, said tread band (109) comprises a radially inner layer or tread base (109c) and a radially outer layer or tread cap (109b): the tread base (109c) may be made according to the present invention.

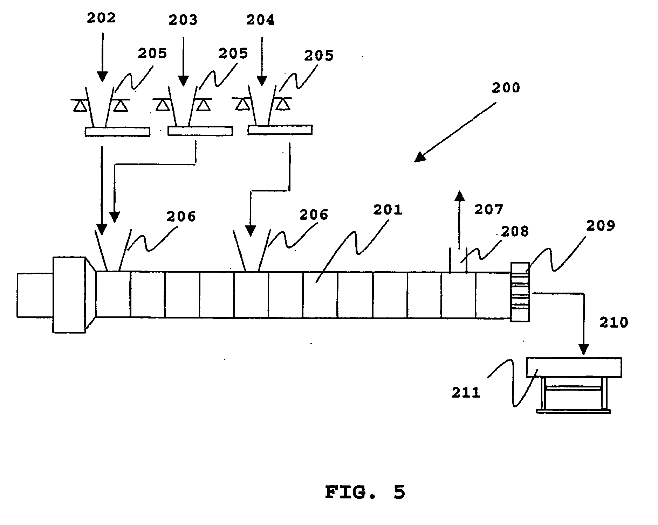

As represented in Fig. 5, the tread base (109c) has a uniform thickness. In any case, the thickness of the tread base (109c) may also be not uniform but, for example, greater near its outer edges and/or at the central zone thereof.

With reference to Fig. 5, the production plant (200) includes an extruder (201) suitable for carrying out the masterbatch preparation according to the present invention. As schematically shown in Fig. 5, by means of feed hoppers (206) the extruder (201) is fed with the compounds necessary for producing the masterbatch. Preferably, the extruder is a co-rotating twin screw extruder.

According to one embodiment, the elastomeric polymer (202) and the functionalized monomers containing at least one ethylenic unsaturation (203) are fed to the extruder through a feed hopper (206). Alternatively, the compounds may be fed to the extruder (201) through different feed hoppers (not represented in Fig. 5).

Each flow (202) and (203) is fed to the feed hopper (206) by means of different metering devices (205). Preferably said metering devices are loss-in-weight gravimetric feeders. Alternatively, each flow (202) and (203) may be fed to the feed hopper (206) by means of the same metering device (205) (not represented in Fig. 5).

Alternatively, the functionalized monomers containing at least one ethylenic unsaturation (203) may be in a molten state and may be injected to the extruder (201) by means of a gravimetrically controlled feeding pump (not represented in Fig. 5).

Alternatively, the functionalized monomers containing at least one ethylenic unsaturation (203) may be fed to the extruder in admixture with an inert carrier such as, for example, a micronized polyethylene wax (for example, Ceridust^{®} 3620 - Clariant).

Alternatively, a previously made elastomeric polymer including at least one functional group may be fed to the extruder (201) through a feed hopper (206) by means of a metering device (205).

Fig. 5 shows also a degassing unit schematically indicated by reference sign (208) from which a flow of the gases possibly generated during extrusion (207) exits.

The layered inorganic material (204) is subsequently fed to the extruder through a feed hopper (206). Preferably, the layered inorganic material is fed at the first side port of the extruder (not represented in Fig. 5).

The resulting masterbatch (210) is discharged from the extruder (201), e.g. in the form of a continuous strand, by pumping it through an extruder die (209) and is conveyed to a cooling device (211). A gear pump (not represented in Fig. 1) may be provided before said extruder die (209). After cooling, the resulting masterbatch may be granulated by means of a grinding device (not represented in Fig. 5).

Alternatively, the masterbatch (210) is discharged from the extruder (201) in the form of a subdivided product by pumpimg it through an extruder die (209) which may be provided with a perforated die plate equipped with knives (not represented in Fig. 5). The obtained subdivided product may be, e.g. in a granular form, with an average diameter of the granules generally of from 0.5 mm to about 3 mm, preferably of from 1 mm to 2 mm, and a length generally of from about 1 mm to 4 mm, preferably of from 1.5 mm to 3 mm.

The process for producing the tire according to the present invention may be carried out according to techniques and using apparatus that are known in the art, as described, for example, in patents EP 199,064, US 4,872,822, US 4,768,937, said process including at least one stage of manufacturing the crude tire and at least one stage of vulcanizing this tire.

More particularly, the process for producing the tire comprises the steps of preparing, beforehand and separately from each other, a series of semi-finished products corresponding to the various structural elements of the tire (carcass plies, belt structure, bead wires, fillers, sidewalls and tread band) which are then combined together using a suitable manufacturing machine. Next, the subsequent vulcanization step welds the abovementioned semi-finished products together to give a monolithic block, i.e. the finished tire.

The step of preparing the abovementioned semi-finished products will be preceded by a step of preparing and moulding the various crosslikable elastomeric compositions, of which said semi-finished products are made, according to conventional techniques.

The crude tire thus obtained is then passed to the subsequent steps of moulding and vulcanization. To this end, a vulcanization mould is used which is designed to receive the tire being processed inside a moulding cavity having walls which are countermoulded to define the outer surface of the tire when the vulcanization is complete.

Alternative processes for producing a tire or parts of a tire without using semi-finished products are disclosed, for example, in the abovementioned patent applications EP 928,680 and EP 928,702.

According to one preferred embodiment, said structural elements are formed by a plurality of coils of a continuous elongated element. Said elongated element may be produced, for example, by extruding the crosslinkable elastomeric composition above disclosed. Preferably, said structural elements are assembled onto a support.

For the purposes of the present description and of the claims which follow, the term "support" is used to indicate the following devices:
- an auxiliary drum having a cilindrical shape, said auxiliary drum preferably supporting a belt structure;
- a shaping drum having a substantially toroidal configuration, said shaping drum preferably supporting at least one carcass structure with a belt structure assembled thereon;
- a rigid support preferably shaped according to the inner configuration of the tire.

Further details regarding said devices and the methods of forming and/or depositing the structural elements of the tire on a support are described, for example, in International Patent Application WO 01/36185 and in European Patent EP 976,536 in the name of the Applicant, and in European Patent Applications: EP 968,814, EP 1,201,414 and EP 1,211,057.

The crude tire can be moulded by introducing a pressurized fluid into the space defined by the inner surface of the tire, so as to press the outer surface of the crude tire against the walls of the moulding cavity. In one of the moulding methods widely practised, a vulcanization chamber made of elastomeric material, filled with steam and/or another fluid under pressure, is inflated inside the tire closed inside the moulding cavity. In this way, the crude tire is pushed against the inner walls of the moulding cavity, thus obtaining the desired moulding. Alternatively, the moulding may be carried out without an inflatable vulcanization chamber, by providing inside the tire a toroidal metal support shaped according to the configuration of the inner surface of the tire to be obtained as described, for example, in Europen Patent EP 1,189,744.

At this point, the step of vulcanizing the crude tire is carried out. To this end, the outer wall of the vulcanization mould is placed in contact with a heating fluid (generally steam) such that the outer wall reaches a maximum temperature generally of from about 100°C to about 230°C. Simultaneously, the inner surface of the tire is heated to the vulcanization temperature using the same pressurized fluid used to press the tire against the walls of the moulding cavity, heated to a maximum temperature of from about 100°C to about 250°C. The time required to obtain a satisfactory degree of vulcanization throughout the mass of the elastomeric material may vary in general from about 3 min to about 90 min and depends mainly on the dimensions of the tire. When the vulcanization is complete, the tire is removed from the vulcanization mould.

The present invention will be further illustrated below by means of a number of preparation examples, which are given for purely indicative purposes and without any limitation of this invention.

### EXAMPLE 1

### Preparation of the elastomeric polymer including a functional group in a twin-screw extruder

The amounts of the compounds used are given in Table 1 (the amounts of the various components are given in phr).

**TABLE 1**

| EXAMPLE | 1 |
|---|---|
| IR | 100 |
| maleic anhydride | 2 |
| polyethylene wax | 4 |

| | |
|---|---|
| IR: cis-1,4-polyisoprene (SKI3 - Nizhnekamskneftechim Export); maleic anhydride: commercial product from Lonza; polyethylene wax: Ceridust^{®} 3620 (Clariant). | |

The cis-1-4-polyisoprene was obtained in the form of granules having an average particles size diameter of about 3 mm - 20 mm, by means of a rubber grinder. The so obtained granules and maleic anhydride, also in a granular form, were fed to the feed hopper of a co-rotating twin-screw extruder Maris TM40HT having a nominal screw diameter of about 40 mm and a L/D ratio of about 48. The maximum temperature in the extruder was about 180°C. The extrusion head was kept at a temperature of about 40°C.

The obtained elastomeric polymer was discharged from the extruder in the form of a continuous strand, was cooled at room temperature in a cooling device and granulated. A sample of the obtained elastomeric polymer was subjected to Infrared ATR-Spectroscopy analysis below reported in order to evaluate the amount of the grafted maleic anhydride.

### IR analysis

The elastomeric polymer obtained as above disclosed was subjected to Infrared ATR-Spectroscopy analysis.

A thin plate of the ealstomeric polymer (0.5 g weight) was obtained by pressure die-casting, under vacuum, at about 70°C, the elastomeric polymer obtained as above disclosed.

The obtained thin plate was put in a Soxhlet apparatus in order to extract the non-grafted maleic anhydride: the extraction was carried out in a toluene:ethanol (70:30) solvent mixture, for about 8 hours, at the reflux temperature of the solvent.

The amount of the grafted maleic anhydride was calculated by means of a calibration curve.

The signals used are the following: the signal at 1780 cm⁻¹ which refers to the C=O stretching of the acid form of the carbonyl group of the maleic anhydride (open form of the maleic anhydride) and the signal at 840 cm⁻¹ which refers to the bending of the C=C group of cis-1,4-polyisoprene.

The amount of the grafted maleic anhydride was calculated from the ratio between the area of the signal corresponding to maleic anhydride and the area of the signal corresponding to cis-1,4-polyisoprene by means of a calibration curve.

The elastomeric polymer was found to include about 0.6% by weight of grafted maleic anhydride with respect to the total weight of the elastomeric polymer.

### EXAMPLE 2

### Preparation of the masterbatch in a twin-screw extruder

The masterbatch was prepared as follows by using a production plant as reported in Fig. 5.

The amounts of the compounds used are given in Table 2 (the amounts of the various components are given in phr).

**TABLE 2**

| EXAMPLE | 2 |
|---|---|
| IR | 100 |
| maleic anhydride | 2 |
| Dellite^{®} 67G | 20 |

| | |
|---|---|
| IR: cis-1,4-polyisoprene (SKI3 - Nizhnekamskneftechim Export); maleic anhydride: commercial product from Lonza; Dellite^{®} 67G: organo-modified montmorillonite belonging to the smectite family (Laviosa Chimica Mineraria S.p.A.). | |

The cis-1-4-polyisoprene was obtained in the form of granules having an average particles size diameter of about 3 mm - 20 mm, by means of a rubber grinder. The so obtained granules and maleic anhydride, also in a granular form, were fed to the feed hopper of a co-rotating twin-screw extruder Maris TM40HT having a nominal screw diameter of about 40 mm and a L/D ratio of about 48.

The organo-modified montmorillonite was subsequently added by means of a gravimetric loss-in-weight feeder at the first side port of the extruder (not represented in Fig. 5).

The maximum temperature in the extruder was about 180°C. The extrusion head was kept at a temperature of about 40°C.

The obtained masterbatch was discharged from the extruder in the form of a continuous strand, was cooled at room temperature in a cooling device and granulated.

The obtained masterbatch was subjected to Infrared ATR-Spectroscopy analysis operating as disclosed above.
The elastomeric polymer was found to include about 0.5% of grafted maleic anhydride with respect to the total weight of the elastomeric polymer.

### EXAMPLE 3

### Preparation of the masterbatch in a twin-screw extruder

The masterbatch was prepared as follows by using a production plant as reported in Fig. 5.

The amounts of the compounds used are given in Table 3 (the amounts of the various components are given in phr).

**TABLE 3**

| EXAMPLE | 3 |
|---|---|
| IR-g-MAH | 100 |
| Dellite^{®} 67G | 20 |

| | |
|---|---|
| IR-g-MAH: functionalized cis-1,4-polyisoprene obtained in Example 1; Dellite^{®} 67G: organo-modified montmorillonite belonging to the smectite family (Laviosa Chimica Mineraria S.p.A.). | |

The functionalized cis-1-4-polyisoprene, in granular form, was fed to the feed hopper of a co-rotating twin-screw extruder Maris TM40HT having a nominal screw diameter of about 40 mm and a L/D ratio of about 48.

The organo-modified montmorillonite was subsequently added by means of a gravimetric loss-in-weight feeder at the first side port of the extruder (not represented in Fig. 5).

The maximum temperature in the extruder was about 180°C. The extrusion head was kept at a temperature of about 40°C.

The obtained masterbatch was discharged from the extruder in the form of a continuous strand, was cooled at room temperature in a cooling device and granulated.

### EXAMPLES 4-7

### Preparation of the elastomeric compositions

The elastomeric compositions given in Table 4 were prepared as follows (the amounts of the various components are given in phr).

All the components, except sulphur and accelerator (DCBS), were mixed together in an internal mixer (model Pomini PL 1.6) for about 5 min (1^{st} Step). As soon as the temperature reached 145±5°C, the elastomeric composition was discharged. The sulphur, the accelerator and HMT, were then added and mixing was carried out in an open roll mixer (2^{nd} Step).

**TABLE 4**

| EXAMPLE | 4 (*) | 5 | 6 | 7 |
|---|---|---|---|---|
| 1^{st} STEP | | | | |
| IR | 100 | - | - | - |
| N326 | 40 | 40 | 40 | 40 |
| Zinc oxide | 4 | 4 | 4 | 4 |
| Stearic acid | 2 | 2 | 2 | 2 |
| Antioxidant | 2 | 2 | 2 | 2 |
| X50S^{®} | 4 | 4 | 4 | 4 |
| Dellite^{®} 67G | 20 | 20 | - | - |
| IR-g-MAH | - | 100 | - | - |
| Masterbatch of Example 2 | - | - | 120 | - |
| Masterbatch of Example 3 | - | - | - | 120 |

| 2^{nd} STEP | | | | |
|---|---|---|---|---|
| DCBS | 1.8 | 1.8 | 1.8 | 1.8 |
| Sulphur | 2 | 2 | 2 | 2 |

| | | | | |
|---|---|---|---|---|
| (*): comparative. IR: cis-1,4-polyisoprene (SKI3 - Nizhnekamskneftechim Export); N326: carbon black; Antioxidant: phenyl-p-phenylenediamine; X50S: silane coupling agent comprising 50% by weight of carbon black and 50% by weight of bis(3-triethoxysilylpropyl) tetrasulphide (Degussa-Hüls); Dellite^{®} 67G: organo-modified montmorillonite belonging to the smectite family (Laviosa Chimica Mineraria S.p.A.); IR-g-MAH: functionalized cis-1,4-polyisoprene obtained in Example 1; DCBS (accelerator): benzothiazyl-2-dicyclohexyl-sulfenamide (Vulkacit^{®} DZ/EGC - Bayer); | | | | |

The Mooney viscosity ML(1+4) at 100°C was measured, according to Standard ISO 289-1:1994, on the non-crosslinked elastomeric compositions obtained as described above. The results obtained are given in Table 5.

The static mechanical properties according to Standard ISO 37:1994 as well as hardness in IRHD degrees at 23°C according to ISO standard 48:1994, were measured on samples of the abovementioned elastomeric compositions vulcanized at 170°C for 10 min. The results obtained are given in Table 5.

Table 5 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 12 mm), compression-preloaded up to a 10% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Finally, the tear resistance values were measured on samples of the abovementioned elastomeric compositions according to Standard ISO 34-1:1994 (Method C, at 23°C) and the obtained results are also given in Table 5.

**TABLE 5**

| EXAMPLE | 4(*) | 5 | 6 | 7 |
|---|---|---|---|---|
| Mooney viscosity ML (1+4) | 37.3 | 68.2 | 48.5 | 63.5 |

| STATIC MECHANICAL PROPERTIES | | | | |
|---|---|---|---|---|
| 100% Modulus | 2.44 | 5.33 | 4.58 | 5.54 |
| 300% Modulus | 8.42 | 16.25 | 13.18 | 15.74 |

| DYNAMIC MECHANICAL PROPERTIES | | | | |
|---|---|---|---|---|
| E' (23°C) | 8.34 | 16.13 | 16.75 | 16.42 |
| E' (70°C) | 5.10 | 9.89 | 10.43 | 10.25 |
| Tandelta (23°C) | 0.339 | 0.239 | 0.258 | 0.240 |
| Tandelta (70°C) | 0.213 | 0.180 | 0.206 | 0.165 |
| IRHD Hardness (23°C) | 67.3 | 78.8 | 84.3 | 79.8 |
| IRHD Hardness (70°C) | 59.6 | 68.4 | 70.6 | 68.9 |
| Tear resistance (N/mm) | 78 | 99 | 107 | 102 |

| | | | | |
|---|---|---|---|---|
| (*): comparative. | | | | |

## Claims

1. Tire comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one structural element selected from bead filler, sidewall insert, tread underlayer, tread base, obtained by crosslinking a crosslinkable elastomeric composition comprising:
(a) a crosslinkable elastomeric base comprising at least 30 phr of at least one elastomeric polymer including from 0.05% by weight to 10% by weight with respect to the total weight of the elastomeric polymer of at least one functional group selected from carboxylic groups, carboxylate groups, anhydride groups, ester groups;
(b) from 2 phr to 50 phr of at least one layered inorganic material.

2. Tire according to claim 1, wherein said crosslinkable elastomeric base comprises from 50 phr to 100 phr of at least one elastomeric polymer including from 0.05% by weight to 10% by weight with respect to the total weight of the elastomeric polymer of at least one functional group selected from carboxylic groups, carboxylate groups, anhydride groups, ester groups.

3. Tire according to claim 1 or 2, wherein said elastomeric polymer includes from 0.1% by weight to 5% by weight with respect to the total weight of the elastomeric polymer of at least one functional group selected from carboxylic groups, carboxylate groups, anhydride groups, ester groups.

4. Tire according to any one of the preceding claims, wherein said layered inorganic material is present in an amount of from 5 phr to 30 phr.

5. Tire according to any one of the preceding claims, wherein said functional group is grafted onto the elastomeric polymer.

6. Tire according to any one of the preceding claims, wherein said crosslinkable elastomeric base (a) comprises at least one second elastomeric polymer in an amount not higher than 70 phr.

7. Tire according to claim 6, wherein said crosslinkable elastomeric base (a) comprises at least one second elastomeric polymer in an amount of from 0 phr to 50 phr.

8. Tire according to any one of the preceding claims, wherein said sidewall insert extends radially from a position corresponding to the bead structure to a position corresponding to a tread lateral edge.

9. Tire according to any one of the preceding claims, wherein said tread underlayer is a layer of crosslinked elastomeric composition applied in a radially internal position with respect to said tread band.

10. Tire according to any one of the preceding claims, wherein said tread band is of cap and base construction and comprises a radially inner layer or tread base and a radially outer layer or tread cap.

11. Tire according to any one of the preceding claims, wherein said structural element has a tensile modulus at 100% elongation (100% Modulus) not lower than 3 MPa.

12. Tire according to claim 11, wherein said structural element has a tensile modulus at 100% elongation (100% Modulus) of from 4.5 MPa to 14 MPa.

13. Tire according to any one of the preceding claims, wherein said structural element has a dynamic elastic modulus (E'), measured at 23°C, not lower than 9 MPa.

14. Tire according to claim 13, wherein said structural element has a dynamic elastic modulus (E'), measured at 23°C, of from 11 MPa to 50 MPa.

15. Tire according to any one of the preceding claims, wherein said structural element has a dynamic elastic modulus (E'), measured at 70°C, not lower than 6 MPa.

16. Tire according to claim 15, wherein said structural element has a dynamic elastic modulus (E'), measured at 70°C, of from 9 MPa to 40 MPa.

17. Tire according to any one of the preceding claims, wherein said structural element has a IRHD hardness, measured at 23 °C, not lower than 65.

18. Tire according to claim 17, wherein said structural element has a IRHD hardness, measured at 23°C, of from 70 to 95.

19. Tire according to any one of the preceding claims, wherein said crosslinkable elastomeric composition comprises from 0 phr to 120 phr of at least one carbon black reinforcing filler.

20. Tire according to claim 19, wherein said crosslinkable elastomeric composition comprises from 20 phr to 90 phr of at least one carbon black reinforcing filler.

21. Tire according to any one of the preceding claims, wherein said elastomeric polymer including at least one functional group has a weight average molecular weight (M_{w}) not lower than about 80,000.

22. Tire according to claim 21, wherein said elastomeric polymer including at least one functional group has a weight average molecular weight (M_{w}) of from about 100,000 to about 1,000,000.

23. Tire according to any one of the preceding claims, wherein said elastomeric polymer including at least one functional group has a Mooney viscosity ML(1+4) not lower than about 40.

24. Tire according to claim 23, wherein said elastomeric polymer including at least one functional group has a Mooney viscosity ML(1+4) of from 50 to 110.

25. Tire according to any one of the preceding claims, wherein said functional group is introduced into the elastomeric polymer during the production of said elastomeric polymer by co-polymerization with at least one corresponding functionalized monomer containing at least one ethylenic unsaturation; or by subsequent modification of said elastomeric polymer by grafting said at least one functionalized monomer in the presence of a free radical initiator.

26. Tire according to any one of the preceding claims, wherein said functional group is introduced into the elastomeric polymer by means of a process comprising:
- feeding at least one elastomeric polymer and at least one functionalized monomer containing at least one ethylenic unsaturation into at least one extruder comprising a housing, at least one screw rotatably mounted in said housing including at least one feed opening and a discharge opening;
- mixing and softening said mixture so as to obtain an elastomeric polymer including at least one functional group;
- discharging the elastomeric polymer obtained in the above step through the discharge opening.

27. Tire according to claim 25 or 26, wherein said functionalized monomer containing at least one ethylenic unsaturation is selected from monocarboxylic or dicarboxylic acids containing at least one ethylenic unsaturation or derivatives thereof, in particular salts, anhydride or esters.

28. Tire according to claim 27, wherein said monocarboxylic or dicarboxylic acids containing at least one ethylenic unsaturation or derivatives thereof are: maleic acid, fumaric acid, citraconic acid, itaconic acid, acrylic acid, methacrylic acid, and salts, anhydrides or esters derived therefrom, or mixtures thereof.

29. Tire according to any one of the preceding claims, wherein the elastomeric polymer utilized in the production of said elastomeric polymer including at least one functional group is selected from sulphur-crosslinkable elastomeric polymer or copolymers with an unsaturated chain having a glass transition temperature below about 20°C.

30. Tire according to claim 29, wherein the elastomeric polymer utilized in the production of said elastomeric polymer including at least one functional group is selected from: natural or synthetic cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

31. Tire according to any one of claims 1 to 28, wherein the elastomeric polymer utilized in the production of said elastomeric polymer including at least one functional group is selected from elastomeric polymers of one or more monoolefins with an olefinic comonomer and at least one diene, or derivatives thereof.

32. Tire according to claim 31, wherein the elastomeric polymer utilized in the production of said elastomeric polymer including at least one functional group is selected from: ethylene/propylene/diene copolymers (EPDM); polyisobutene; butyl rubbers; halobutyl rubbers; or mixtures thereof.

33. Tire according to any one of the preceding claim, wherein said layered inorganic material (b) is selected from phyllosilicates such as: smectites such as, montmorillonite, nontronite, beidellite, volkonskoite, laponite, hectorite, saponite, sauconite, magadite, kenyasite, stevensite; vermiculite; halloisite; sericite; aluminate oxides; hydrotalcite; or mixtures thereof.

34. Tire according to claim 33, wherein said layered inorganic material (b) is montmorillonite.

35. Tire according to any one of the preceding claims, wherein said layered inorganic material (b) is treated with a compatibilizing agent.

36. Tire according to claim 35, wherein said compatibilizing agent is selected from the quaternary ammonium or phosphonium salts having general formula (I): 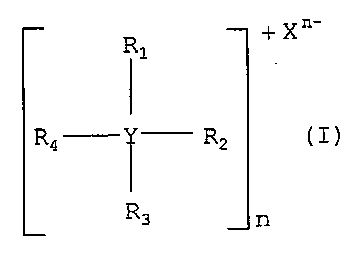 wherein:
- Y represents N or P;
- R₁, R₂, R₃ and R₄, which may be identical or different, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇₋C₂₀ arylalkyl or alkylaryl group; a C₅-C₁₈ cycloalkyl group, said cycloalkyl group possibly containing hetero atom such as oxygen, nitrogen or sulphur;
- Xⁿ⁻ represents an anion such as the chlorine ion, the sulphate ion or the phosphate ion;
- n represents 1, 2 or 3.

37. Tire according to any one of the preceding claims, wherein said elastomeric polymer including at least one functional group is pre-mixed with said layered inorganic material in order to obtain a masterbatch.

38. Tire according to claim 37, wherein said masterbatch is obtained by means of a process comprising the following steps:
- feeding at least one elastomeric polymer including at least one functional group and at least one layered inorganic material into at least one extruder comprising a housing, at least one screw rotatably mounted in said housing including at least one feed opening and a discharge opening;
- mixing and softening said mixture so as to obtain a masterbatch;
- discharching the obtained masterbatch through a discharge opening.

39. Tire according to claim 37, wherein the masterbatch is obtained by means of a process comprising the following steps:
- feeding at least one elastomeric polymer, at least one functionalized monomer containing at least one ethylenic unsaturation, and at least one layered inorganic material, into at least one extruder comprising a housing, at least one screw rotatably mounted in said housing including at least one feed opening and a discharge opening;
- mixing and softening said mixture so as to obtain a masterbatch;
- discharching the obtained masterbatch through a discharge opening.

40. Tire according to any one of the preceding claims, wherein said crosslinkable elastomeric base (a) comprises at least one second elastomeric polymer selected from:
- natural or synthetic cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof;
- ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

41. Tire according to any one of the preceding claims, wherein said crosslinkable elastomeric composition comprises at least one silane coupling agent (d).

42. Tire according to claim 41, wherein said silane coupling agent (d) is selected from those having at least one hydrolizable silane group which may be identified by the following general formula (II):
(R)₃Si-CₙH₂ₙ-X (II)
wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ or -S-COR in which m and n are integers between 1 and 6 inclusive and the groups R are defined as above.

43. Tire according to claim 41 or 42, wherein said silane coupling agent (d) is present in the crosslinkable elastomeric composition in an amount of from 0 phr to 10 phr.

44. Tire for vehicle wheels according to claim 43, wherein said silane coupling agent (d) is present in the crosslinkable elastomeric composition in an amount of from 0.5 phr to 5 phr.

45. Tire according to any one of the preceding claims, wherein at least one additional reinforcing filler is present in said crosslinkable elastomeric composition in an amount of from 0 phr to 120 phr.

46. Tire according to claim 45, wherein said additional reinforcing filler is silica.

47. Tire for vehicle wheels according to claim 46, wherein at least one silane coupling agent (d) according to claim 43 is present.

48. Use of a crosslinkable elastomeric composition comprising:
(a) a crosslinkable elastomeric base comprising at least 30 phr of at least one elastomeric polymer including from 0.05% by weight to 10% by weight with respect to the total weight of the elastomeric polymer of at least one functional group selected from carboxylic groups, carboxylates groups, anhydride groups, ester groups;
(b) from 2 phr to 50 phr of at least one layered inorganic material; and
(c) from 0.1 phr to 120 phr of at least one carbon black reinforcing filler;
for the manufacture of a structural element of a tire selected from bead filler, sidewall insert, tread underlayer and tread base.

49. Use according to claim 48, wherein said crosslinkable elastomeric base comprises from 50 phr to 100 phr of at least one elastomeric polymer including from 0.05% by weight to 10% by weight with respect to the total weight of the elastomeric polymer of at least one functional group selected from carboxylic groups, carboxylate groups, anhydride groups, ester groups.

50. Use according to claim 48 or 49, wherein said elastomeric polymer includes from 0.1 % by weight to 5% by weight with respect to the total weight of the elastomeric polymer, of at least one functional group selected from carboxylic groups, carboxylate groups, anhydride groups, ester groups.

51. Use according to any one of claims 48 to 50, wherein said layered inorganic material is present in an amount of from 5 phr to 30 phr.

52. Use according to any one of claims 48 to 51, wherein said elastomeric polymer including a functional group is defined according to any one of claims 21 to 32.

53. Use according to any one of claims 48 to 52, wherein said layered inorganic material is defined according to any one of claims 33 to 34.

54. Use according to claim 53, wherein said layered inorganic material is added as such.

55. Use according to claim 53, wherein said layered inorganic material is added after being treated with at least one compatibilizing agent which is defined according to claim 36.

56. Use according to any one of claims 48 to 55, wherein said elastomeric polymer including at least one functional group is pre-mixed with said layered inorganic material in order to obtain a masterbatch.

57. Use according to claim 56, wherein said masterbatch is obtained according to claim 38 or 39.

58. Use according to any one of claims 48 to 57, wherein said crosslinkable elastomeric base (a) comprises a second elastomeric polymer defined according to claim 40.

59. Use according to any one of claims 48 to 58, wherein said crosslinkable elastomeric composition comprises at least one silane coupling agent (d) defined according to any one of claims 41 to 44.

60. Use according to any one of claims 48 to 59, wherein at least one additional reinforcing filler is present in an amount of from 0 phr to 120 phr.

61. Use according to claim 60, wherein the additional reinforcing filler is silica.

62. Use according to claim 60, wherein at least one silane coupling agent (d) defined according to any one of claims 42 to 44 is present.

63. Use of a crosslinkable elastomeric composition as defined in any one of claims 48-62 for improving the mechanical properties and/or the hardness of a structural element of a tire selected from bead filler, sidewall insert, tread underlayer and tread base.

## Patentansprüche

1. Reifen, der folgendes umfaßt:
- ein Karkassenaufbau, der im Wesentlichen ringförmig ist und gegenüberliegende seitliche Kanten aufweist, die mit den rechten und linken Wulstaufbauten verbunden sind, die ihrerseits wenigstens einen Wulstkern und wenigstens einen Kernreiter aufweisen;
- einen Gürtelaufbau, der im Hinblick auf den Karkassenaufbau in radial äußerer Position aufgebracht ist;
- eine radial auf den Gürtelbau aufgebrachtes Laufflächenband;
- ein Paar von Seitenwänden, die lateral auf die gegenüberliegenden Seiten in Bezug auf den Karkassenaufbau aufgebracht sind;
- wenigstens ein Bauelement, ausgewählt aus Kernreiter, Seitenwandeinlage, Laufflächenunterlage und Unterprotektor, erhalten durch Vernetzung einer vernetzbaren Elastomermischung, die folgendes umfaßt:
(a) eine vernetzbare Elastomerbasis, die wenigstens 30 phr wenigstens eines Elastomerpolymers aus 0,05 Gew.-% bis 10 Gew.-%, bezogen auf das Gesamtgewicht des Elastomerpolymers, wenigstens einer funktionellen Gruppe, ausgewählt unter Carboxyl-, Carboxylat-, Anhydrid- und Estergruppen, umfaßt, und
(b) 2 phr bis 50 phr wenigstens eines geschichteten anorganischen Materials.

2. Reifen nach Anspruch 1, wobei die vernetzbare Elastomerbasis 50 phr bis 100 phr wenigstens eines Elastomerpolymers aus 0,05 Gew.-% bis 10 Gew.-%, bezogen auf das Gesamtgewicht des Elastomerpolymers, wenigstens einer funktionellen Gruppe, ausgewählt unter Carboxyl-, Carboxylat-, Anhydrid- und Estergruppen, umfaßt.

3. Reifen nach Anspruch 1 oder 2, wobei das Elastomerpolymer aus 0,1 Gew.-% bis 5 Gew.-%, bezogen auf das Gesamtgewicht des Elastomerpolymers, wenigstens einer funktionellen Gruppe, ausgewählt unter Carboxyl-, Carboxylat-, Anhydrid- und Estergruppen, umfaßt.

4. Reifen nach einem der vorhergehenden Ansprüche, wobei das geschichtete anorganische Material in einer Menge von 5 phr bis 30 phr vorliegt.

5. Reifen nach einem der vorhergehenden Ansprüche, wobei die funktionale Gruppe auf das Elastomerpolymer aufgepfropft ist.

6. Reifen nach einem der vorhergehenden Ansprüche, wobei die vernetzbare Elastomerbasis (a) wenigstens ein zweites Elastomerpolymer in einer Menge von höchstens 70 phr umfaßt.

7. Reifen nach Anspruch 6, wobei die vernetzbare Elastomerbasis (a) wenigstens ein zweites Elastomerpolymer in einer Menge von 0 phr bis 50 phr umfaßt.

8. Reifen nach einem der vorhergehenden Ansprüche, wobei die Seitenwandeinlage sich radial aus einer Position, die dem Wulstaufbau entspricht, bis in eine Position, die der Laufflächenseitenkante entspricht, erstreckt.

9. Reifen nach einem der vorhergehenden Ansprüche, wobei die Laufflächenunterlage eine Schicht aus einem in einer radial inneren Position in Bezug auf das Laufflächenband aufgebrachte Schicht aus vernetztem Elastomergemisch ist.

10. Reifen nach einem der vorhergehenden Ansprüche, wobei das Laufflächenband eine Abdeckungs- und Basiskonstruktion darstellt und eine radial innere Schicht bzw. eine Unterprotektor und eine radial äußere Schicht bzw. eine Laufflächenkrone umfaßt.

11. Reifen nach einem der vorhergehenden Ansprüche, wobei das Strukturelement einen Zugfestigkeitsmodul bei 100 %-iger Dehnung (100 %-Modul) von mindestens 3 MPa aufweist.

12. Reifen nach Anspruch 11, wobei das Strukturelement einen Zugfestigkeitsmodul bei 100 %-iger Dehnung (100 %-Modul) von 4,5 MPa bis 14 MPa aufweist.

13. Reifen nach einem der vorhergehenden Ansprüche, wobei das Strukturelement einen dynamischen Elastizitätsmodul (E'), gemessen bei 23° C, von mindestens 9 MPa aufweist.

14. Reifen nach Anspruch 13, wobei das Strukturelement einen dynamischen Elastizitätsmodul (E'), gemessen bei 23° C, von 11 MPa bis 50 MPa aufweist.

15. Reifen nach einem der vorhergehenden Ansprüche, wobei das Strukturelement einen dynamischen Elastizitätsmodul (E'), gemessen bei 70° C, von mindestens 6 MPa aufweist.

16. Reifen nach Anspruch 15, wobei das Strukturelement einen dynamischen Elastizitätsmodul (E'), gemessen bei 70° C, von 9 MPa bis 40 MPa aufweist.

17. Reifen nach einem der vorhergehenden Ansprüche, wobei das Strukturelement eine IPHD-Härte, gemessen bei 23° C, von mindestens 65 aufweist.

18. Reifen nach Anspruch 17, wobei das Strukturelement eine IRHD-Härte, gemessen bei 23° ° C, von 70 bis 95 aufweist.

19. Reifen nach einem der vorhergehenden Ansprüche, wobei das vernetzbare Elastomergemisch 0 phr bis 120 phr wenigstens eines Rußverstärkungsfüllers umfaßt.

20. Reifen nach Anspruch 19, wobei das vernetzbare Elastomergemisch 20 phr bis 90 phr wenigstens eines Rußverstarkungsfüllers umfaßt.

21. Reifen nach einem der vorhergehenden Ansprüche, wobei das Elastomerpolymer, das wenigstens eine funktionelle Gruppe umfaßt, eine massegemittelte Molekülmasse (M_{W}) von mindestens ca. 80.000 aufweist.

22. Reifen nach Anspruch 21, wobei das Elastomerpolymer, das wenigstens eine funktionelle Gruppe umfaßt, eine massegemittelte Molekülmasse (M_{W}) von ca. 100.000 bis ca. 1.000.000 aufweist.

23. Reifen nach einem der vorhergehenden Ansprüche, wobei das Elastomerpolymer, das wenigstens eine funktionelle Gruppe umfaßt, eine Mooney-Viskosität ML(1+4) von mindestens ca. 40 aufweist.

24. Reifen nach Anspruch 23, wobei das Elastomerpolymer, das wenigstens eine funktionelle Gruppe umfaßt, eine Mooney-Viskosität ML(1+4) von 50 bis 110 aufweist.

25. Reifen nach einem der vorhergehenden Ansprüche, wobei die funktionelle Gruppe in das Elastomerpolymer während der Herstellung desselben durch Copolymerisation mit wenigstens einem entsprechenden, wenigstens eine ethylenische Ungesättigtheit enthaltendem funktionalisiertem Monomer oder durch nachfolgendem Modifizierung des Elastomerpolymers durch Aufpfropfen wenigstens eines funktionalisierten Monomers in Anwesenheit eines Radikalinitiators eingearbeitet wird.

26. Reifen nach einem der vorhergehenden Ansprüche, wobei die funktionelle Gruppe in das Elastomerpolymer nach einem Verfahren eingearbeitet wird, das folgendes umfaßt:
- Zufuhr wenigstens eines Elastomerpolymers und wenigstens eines funktionalisierten Monomers, enthaltend wenigsten eine ethylenische Ungesättigtheit, zu wenigstens einem Extruder, umfassend ein Gehäuse und wenigstens eine darauf drehbar montierte Schnecke umfaßt, wobei das Gehäuse wenigstens eine Aufgabeöffnung und eine Austragsöffnung umfaßt;
- Mischen und Erweichen des Gemisches zur Erzielung eines Elastomerpolymers, das wenigstens eine funktionelle Gruppe umfaßt;
- Austragung des im obigen Schritt erhaltenen Elastomerpolymers durch die Austragöffnung.

27. Reifen nach Anspruch 25 oder 26, wobei das funktionalisierte, wenigstens eine ethylenische Ungesättigtheit enthaltende Monomer ausgewählt wird aus Monocarbon- oder Dicarbonsäuren, die wenigstens eine ethylenische Ungesättigtheit enthalten, oder Derviaten, insbesondere Salzen, Anhydrid oder Estern davon.

28. Reifen nach Anspruch 27, wobei die Monocarbon- oder Dicarbonsäure, die wenigstens eine ethylenische Ungesättigtheit enthalten, oder die Derivate davon Malein-, Fumar-, Citracon-, Itacon-, Acryl-, Methacrylsäure und Salze, Anhydride oder Ester davon oder Gemische daraus sind.

29. Reifen nach einem der vorhergehenden Ansprüche, wobei das zur Herstellung des Elastomerpolymers, das wenigstens eine funktionelle Gruppe enthält, verwendet wird, ausgewählt wird aus mit Schwefel vernetzbarem Elastomerpolymer oder Copolymeren mit einer ungesättigten Kette mit einer Glasumwandlungstemperatur von unter ca. 20° C.

30. Reifen nach Anspruch 29, wobei das für die Herstellung des wenigstens eine funktionelle Gruppe umfassenden Elastomerpolymers verwendete Elastomerpolymer ausgewählt wird unter natürlichem oder synthetischem cis-1,4-Polyisopren, 3,4-Polyisopren, Polybutadien, ggf. halogenierten Isopren-Isobuten-, 1,3-Butadien-Acrylnitril-, Styrol-1,3-Butadien-, Styrol-Isopren-1,3-Butadien- und Styrol-1,3-Butadien-Acrylnitril-Copolymeren oder Gemischen davon.

31. Reifen nach einem der Ansprüche 1 - 28, wobei das für die Herstellung des wenigstens eine funktionelle Gruppe umfassenden Elastomerpolymers verwendete Elastomerpolymer ausgewählt wird unter Elastomerpolymeren aus einem oder mehreren Monoolefinen mit einem Olefincomonomer und wenigstens einem Dien oder Derviaten davon.

32. Reifen nach Anspruch 31, wobei das für die Herstellung des wenigstens eine funktionelle Gruppe umfassenden Elastomerpolymers verwendete Elastomerpolymer ausgewählt wird unter Ethylen-Propylen-Dien-Copolymeren (EPDM), Polyisobuten, Butylkautschuken, Halobutylkautschuken oder Gemischen davon.

33. Reifen nach einem der vorhergehenden Ansprüche, wobei das geschichtete anorganische Material (b) ausgewählt wird unter Blattsilikaten wie Smektiten z.B. Montmorillonit, Nontronit, Beidellit, Volkonskoit, Laponit, Hectorit, Saponit, Sauconit, Magadit, Kenyasit, Stevensit, Vermiculit, Halloisit, Sericit, Aluminatoxiden, Hydrotalcit oder Gemischen davon.

34. Reifen nach Anspruch 33, wobei das geschichtete anorganische Material (b) Montmorillonit ist.

35. Reifen nach einem der vorhergehenden Ansprüche, wobei das geschichtete anorganische Material (b) mit einem Mittel zur Erhöhung der Kompatibilität behandelt wird.

36. Reifen nach Anspruch 35, wobei das Mittel zur Erhöhung der Kompatibilität ausgewählt wird unter quaternärem Ammonium- oder Phosphoniumsalzen der allgemeinen Formel I: 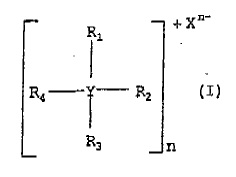 worin Y N oder P darstellt,
R¹, R², R³ und R⁴, die gleich oder unterschiedlich sein können, eine unverzweigte oder verzweigte C₁₋₂₀-Alkyl- oder Hydroxyalkylgruppe, eine unverzweigte oder verzweigte C₁₋₂₀-Alkenyl- oder Hydroxyalkenylgruppe, eine Gruppe -R⁵-SH oder R⁵-NH, wobei R⁵ eine unverzweigte oder verzweigte C₁₋₂₀-Alkylengruppe, eine C₆₋₁₈-Arylgruppe, eine C₇₋₂₀-Arylalkyl- der Alkylarylgruppe und eine C₅₋₁₈-Cycloalkylgruppe darstellt, bedeuten, wobei letztere gegebenenfalls ein Heteroatom wie Sauerstoff, Stickstoff oder Schwefel enthalten kann,
Xⁿ ein Anion wie das Chlor-, Sulfat- oder das Phosphation bedeutet, und
n 1, 2 oder 3 bedeutet.

37. Reifen nach einem der vorhergehenden Ansprüche, wobei das wenigstens eine funktionelle Gruppe umfassende Elastomerpolymer mit dem geschichteten anorganischen Material zur Erzielung einer Vormischung mit dem geschichteten anorganischen Material vorgemischt wird.

38. Reifen nach Anspruch 37, wobei die Vormischung erhalten wird mittels eines Verfahrens, das folgende Stufen umfaßt:
- Zufuhr wenigstens eines, wenigstens eine funktionelle Gruppe enthaltenden Elastomerpolymers und wenigstens eines geschichteten Materials zu wenigstens einem Extruder, umfassend ein Gehäuse und wenigstens eine darauf drehbar montierte Schnecke, wobei das Gehäuse wenigstens eine Aufgabeöffnung und eine Austragöffnung umfaßt;
- Mischen und Erweichen des Gemisches zur Erzielung einer Vormischung;
- Austrag der erhaltenen Vormischung durch eine Austragöffnung.

39. Reifen nach Anspruch 37, wobei die Vormischung erhalten wird mittels eines Verfahrens, das folgende Stufen umfaßt:
- Zufuhr wenigstens eines Elastomerpolymers, wenigstens eines funktionalisierten Monomers, enthaltend wenigstens eine ethylenische Ungesättigtheit, und wenigstens eines geschichteten anorganischen Materials zu wenigstens einem Extruder, umfassend ein Gehäuse und wenigstens eine darauf drehbar montierte Schnecke, wobei das Gehäuse wenigstens eine Aufgabeöffnung und eine Austragöffnung umfaßt;
- Mischen und Erweichen des Gemisches zur Erzielung einer Vormischung;
- Austrag der erhaltenen Vormischung durch eine Austragöffnung.

40. Reifen nach einem der vorhergehenden Ansprüche, wobei die vernetzbare Elastomerbasis (a) wenigstens ein zweites Elastomerpolymer umfaßt, ausgewählt unter:
- natürlichem oder synthetischem cis-1,4-Polyisopren, 3,4-Polyisopren, Polybutadien, ggf. halogenierten Isopren-Isobuten-, 1,3-Butadien-Acrylnitril-, Styrol-1,3-Butadien-, Styrol-Isopren-1,3-Butadien- und Styrol-1,3-Butadien-Acrylnitril-Copolymeren oder Gemischen davon und
- Ethylen-Propylen-Copolymeren (EPR) oder Ethylen-Propylen-Dien-Copolymeren (EPDM), Polyisobuten, Butylkautschuken, Halobutylkautschuken, insbesondere Chlorbutyl- oder Brombutylkautschuken oder Gemischen davon.

41. Reifen nach einem der vorhergehenden Ansprüche, wobei das vernetzbare Elastomergemisch wenigstens ein Silankupplungsmittel (d) umfaßt.

42. Reifen nach Anspruch 41, wobei das Silankupplungsmittel (d) ausgewählt wird unter solchen mit wenigstens einer hydrolisierbaren Silangruppe der allgemeinen Formel II:
(R)³Si-CₙH₂ₙ-X (II)
wobei die Gruppen R, die gleich oder verschieden sein können, ausgewählt werden unter Alkyl-, Alkoxy- oder Aryloxygruppen oder unter Halogenatomen mit der Maßgabe, daß wenigstens eine der Gruppen R eine Alkoxy- oder Aryloxygruppe ist, n eine ganze Zahl zwischen 1 und 6 bedeutet und X eine Gruppe ist, ausgewählt unter Nitroso, Mercapto, Amino, Epoxid, Vinyl, Imid, Chlor, -(S)ₘCₙH₂ₙ-Si-(R)₃ oder -S-COR, wobei m und n ganze Zahlen zwischen 1 und 6 bedeuten und die Gruppen R die obige Bedeutung haben.

43. Reifen nach Anspruch 41 oder 42, wobei das Silankupplungsmittel (d) im vernetzbaren Elastomergemisch in einer Menge von 0 bis 10 phr vorliegt.

44. Reifen für Kraftfahzeugräder nach Anspruch 43, wobei das Silankupplungsmittel (d) im vernetzbaren Elastomergemisch in einer Menge von 0,5 bis 5 phr vorliegt.

45. Reifen nach einem der vorhergehenden Ansprüche, wobei im vernetzbaren Elastomergemisch wenigstens ein zusätzlicher Verstärkungsfüller in einer Menge von 0 phr bis 120 phr vorliegt.

46. Reifen nach Anspruch 45, wobei der zusätzliche Verstärkungsfüller Kieselerde ist.

47. Reifen für Kraftfahrzeugräder nach Anspruch 46, wobei wenigstens ein Silankupplungsmittel (d) nach Anspruch 43 vorliegt.

48. Verwendung eines vernetzbaren Elastomergemisches das
(a) eine vernetzbare Elastomerbasis, die wenigstens 30 phr wenigstens eines Elastomerpolymers aus 0,05 Gew.-% bis 10 Gew.-%, bezogen auf das Gesamtgewicht des Elastomerpolymers, wenigstens einer funktionellen Gruppe, ausgewählt unter Carboxyl-, Carboxylat-, Anhydrid- und Estergruppen, umfaßt,
(b) 2 phr bis 50 phr wenigstens eines geschichteten anorganischen Materials und
(c) 0,1 phr bis 120 phr wenigstens eines Rußverstärkungsfüllers umfaßt,
zur Herstellung eines Bauelements eines Reifens, ausgewählt aus einem Kernreiter, einer Seitenwandeinlage, einer Laufflächenunterlage und einem Unterprotektor.

49. Verwendung nach Anspruch 48, wobei die vernetzbare Elastomerbasis 50 phr bis 100 phr wenigstens eines Elastomerpolymers aus 0,05 Gew.-% bis 10 Gew.-%, bezogen auf das Gesamtgewicht des Elastomerpolymers, wenigstens einer funktionellen Gruppe, ausgewählt unter Carboxyl-, Carboxylat-, Anhydrid- und Estergruppen, umfaßt.

50. Verwendung nach Anspruch 48 oder 49, wobei das Elastomerpolymer 0,1 Gew.-% bis 5 Gew.-%, bezogen auf das Gesamtgewicht des Elastomerpolymers, wenigstens einer funktionellen Gruppe, ausgewählt unter Carboxyl-, Carboxylat-, Anhydrid- und Estergruppen, umfaßt.

51. Verwendung nach Anspruch 48 bis 50, wobei das geschichteten anorganische Material in einer Menge von 5 phr bis 30 phr vorliegt.

52. Verwendung nach einem der Ansprüche 48 bis 51, wobei das eine funktionelle Gruppe umfassende Elastomerpolymer entsprechend einem der Ansprüche 21 bis 32 definiert ist.

53. Verwendung nach einem der Ansprüche 48 bis 52, wobei das geschichtete anorganische Material definiert ist entsprechend einem der Ansprüche 33 bis 34.

54. Verwendung nach Anspruch 53, wobei das geschichtete anorganische Material als solches zugesetzt wird.

55. Verwendung nach Anspruch 53, wobei das geschichtete anorganische Material nach Behandlung mit wenigstens einem Mittel zur Erhöhung der Kompatibilität, wie es gemäß Anspruch 36 definiert wird, zugegeben wird.

56. Verwendung nach einem der Ansprüche 48 bis 55, wobei das wenigstens eine funktionelle Gruppe umfassende Elastomerpolymer zur Erzielung einer Vormischung mit dem geschichteten anorganischen Material vorgemischt wird.

57. Verwendung nach Anspruch 56, wobei die Vormischung gemäß Anspruch 38 oder 39 erhalten wird.

58. Verwendung nach einem der Ansprüche 48 bis 57, wobei die vernetzbare Elastomerbasis (a) ein zweites, gemäß Anspruch 40 definiertes Elastomerpolymer umfaßt.

59. Verwendung nach einem der Ansprüche 48 bis 58, wobei das vernetzbare Elastomergemisch wenigstens ein gemäß einem der Ansprüche 41 bis 44 definiertes Silankupplungsmittel (d) umfaßt.

60. Verwendung nach einem der Ansprüche 48 bis 59, wobei wenigstens ein zusätzlicher Verstärkungsfüller in einer Menge von 0 phr bis 120 phr vorliegt.

61. Verwendung nach Anspruch 60, wobei der zusätzliche Verstärkungsfüller Kieselerde ist.

62. Verwendung nach Anspruch 60, wobei wenigstens ein gemäß einem der Ansprüche 42 bis 44 definiertes Silankupplungsmittel (d) vorliegt.

63. Verwendung eines vernetzbaren Elastomergemisches gemäß einem der Ansprüche 48 bis 62 zur Verbesserung der mechanischen Eigenschaften und/oder der Härte eines Bauelements eines Reifens, ausgewählt aus einem Kernreiter, einer Seitenwandeinlage, einer Laufflächenunterlage und einem Unterprotektor.

## Revendications

1. Pneu qui comprend :
- une structure de carcasse de forme sensiblement toroïdale, présentant des bords latéraux opposés, associés respectivement à des structures de talon gauche et de talon droit, lesquelles structures de talon comprennent au moins une tringle et au moins un bourrage sur tringle ;
- une structure de ceinture, disposée en situation radialement extérieure par rapport à ladite structure de carcasse ;
- une bande de roulement, radialement superposée à ladite structure de ceinture ;
- une paire de flancs, disposés latéralement sur les côtés opposés de ladite structure de carcasse ;
- et au moins un élément de structure, choisi parmi un bourrage sur tringle, un insert de flanc, une sous-couche de bande de roulement et une base de bande de roulement, obtenu par réticulation d'une composition d'élastomère réticulable comprenant :
a) une base élastomère réticulable comprenant au moins 30 pcpr (parties pour cent parties de résine) d'au moins un polymère élastomère qui contient de 0,05 à 10 %, en poids rapporté au poids total de ce polymère élastomère, d'au moins un groupe fonctionnel choisi parmi les groupes carboxyle, carboxylate, anhydride et ester ;
b) et de 2 à 50 pcpr d'au moins un matériau inorganique à structure en couches.

2. Pneu conforme à la revendication 1, dans lequel ladite base élastomère réticulable comprend de 50 à 100 pcpr d'au moins un polymère élastomère qui contient de 0,05 à 10 %, en poids rapporté au poids total de ce polymère élastomère, d'au moins un groupe fonctionnel choisi parmi les groupes carboxyle, carboxylate, anhydride et ester.

3. Pneu conforme à la revendication 1 ou 2, dans lequel ledit polymère élastomère contient de 0,1 à 5 %, en poids rapporté au poids total de ce polymère élastomère, d'au moins un groupe fonctionnel choisi parmi les groupes carboxyle, carboxylate, anhydride et ester.

4. Pneu conforme à l'une des revendications précédentes, dans lequel ledit matériau inorganique à structure en couches se trouve présent en une proportion de 5 à 30 pcpr.

5. Pneu conforme à l'une des revendications précédentes, dans lequel ledit groupe fonctionnel a été greffé sur le polymère élastomère.

6. Pneu conforme à l'une des revendications précédentes, dans lequel ladite base élastomère réticulable (a) comprend au moins un deuxième polymère élastomère, en une proportion d'au plus 70 pcpr.

7. Pneu conforme à la revendication 6, dans lequel ladite base élastomère réticulable (a) comprend au moins un deuxième polymère élastomère, en une proportion de 0 à 50 pcpr.

8. Pneu conforme à l'une des revendications précédentes, dans lequel ledit insert de flanc s'étend, dans la direction radiale, depuis une position correspondant à la structure de talon jusqu'à une position correspondant à un bord latéral de la bande de roulement.

9. Pneu conforme à l'une des revendications précédentes, dans lequel ladite sous-couche de bande de roulement est une couche de composition d'élastomère réticulée, appliquée en situation radialement intérieure par rapport à ladite bande de roulement.

10. Pneu conforme à l'une des revendications précédentes, dans lequel ladite bande de roulement présente une structure chape/base et comprend une couche radialement intérieure, qui est la base de bande de roulement, et une couche radialement extérieure, qui est la chape de bande de roulement.

11. Pneu conforme à l'une des revendications précédentes, dans lequel ledit élément de structure présente un module en traction à 100 % d'allongement (module à 100 %) d'au moins 3 MPa.

12. Pneu conforme à la revendication 11, dans lequel ledit élément de structure présente un module en traction à 100 % d'allongement (module à 100 %) de 4,5 à 14 MPa.

13. Pneu conforme à l'une des revendications précédentes, dans lequel ledit élément de structure présente un module élastique dynamique E', mesuré à 23 °C, d'au moins 9 MPa.

14. Pneu conforme à la revendication 13, dans lequel ledit élément de structure présente un module élastique dynamique E', mesuré à 23 °C, de 11 à 50 MPa.

15. Pneu conforme à l'une des revendications précédentes, dans lequel ledit élément de structure présente un module élastique dynamique E', mesuré à 70 °C, d'au moins 6 MPa.

16. Pneu conforme à la revendication 15, dans lequel ledit élément de structure présente un module élastique dynamique E', mesuré à 70 °C, de 9 à 40 MPa.

17. Pneu conforme à l'une des revendications précédentes, dans lequel ledit élément de structure présente une dureté IRHD, mesurée à 23 °C, d'au moins 65.

18. Pneu conforme à la revendication 17, dans lequel ledit élément de structure présente une dureté IRHD, mesurée à 23 °C, de 70 à 95.

19. Pneu conforme à l'une des revendications précédentes, dans lequel ladite composition d'élastomère réticulable contient de 0 à 120 pcpr d'au moins une charge renforçante de type noir de carbone.

20. Pneu conforme à la revendication 19, dans lequel ladite composition d'élastomère réticulable contient de 20 à 90 pcpr d'au moins une charge renforçante de type noir de carbone.

21. Pneu conforme à l'une des revendications précédentes, dans lequel ledit polymère élastomère contenant au moins un groupe fonctionnel présente une masse molaire moyenne en poids Mw valant au moins environ 80 000.

22. Pneu conforme à la revendication 21, dans lequel ledit polymère élastomère contenant au moins un groupe fonctionnel présente une masse molaire moyenne en poids Mw d'environ 100 000 à environ 1 000 000.

23. Pneu conforme à l'une des revendications précédentes, dans lequel ledit polymère élastomère contenant au moins un groupe fonctionnel présente une viscosité Mooney ML(1+4) d'au moins environ 40.

24. Pneu conforme à la revendication 23, dans lequel ledit polymère élastomère contenant au moins un groupe fonctionnel présente une viscosité Mooney ML(1+4) de 50 à 110.

25. Pneu conforme à l'une des revendications précédentes, pour lequel ledit groupe fonctionnel est introduit dans le polymère élastomère au cours de la production de ce polymère élastomère, par copolymérisation avec au moins un monomère fonctionnalisé correspondant, doté d'au moins une insaturation éthylénique, ou par modification ultérieure dudit polymère élastomère, réalisée par greffage dudit monomère fonctionnalisé au nombre d'au moins un, en présence d'un amorceur radicalaire.

26. Pneu conforme à l'une des revendications précédentes, pour lequel ledit groupe fonctionnel est introduit dans le polymère élastomère par un procédé qui comporte les étapes suivantes :
- introduire au moins un polymère élastomère et au moins un monomère fonctionnalisé, doté d'au moins une insaturation éthylénique, dans au moins une extrudeuse comportant un fourreau et au moins une vis montée de manière à pouvoir tourner dans ledit fourreau, lequel présente au moins un orifice d'introduction, ainsi qu'un orifice de décharge ;
- malaxer et ramollir ce mélange, de manière à obtenir un polymère élastomère contenant au moins un groupe fonctionnel ;
- et décharger le polymère élastomère obtenu dans l'étape précédente, par l'orifice de décharge.

27. Pneu conforme à la revendication 25 ou 26, pour lequel ledit monomère fonctionnalisé, doté d'au moins une insaturation éthylénique, est choisi parmi les acides monocarboxyliques ou dicarboxyliques comportant au moins une insaturation éthylénique et les dérivés de tels acides, en particulier leurs sels, leurs anhydrides et leurs esters.

28. Pneu conforme à la revendication 27, pour lequel lesdits acides monocarboxyliques ou dicarboxyliques comportant au moins une insaturation éthylénique et dérivés de tels acides sont les suivants : acide maléique, acide fumarique, acide citraconique, acide itaconique, acide acrylique, acide méthacrylique, et les sels, esters et anhydrides dérivés de ces acides, ainsi que leurs mélanges.

29. Pneu conforme à l'une des revendications précédentes, pour lequel le polymère élastomère utilisé dans la production dudit polymère élastomère contenant au moins un groupe fonctionnel est choisi parmi les polymères et copolymères élastomères réticulables à l'aide de soufre, dotés d'une chaîne insaturée et présentant une température de transition vitreuse inférieure à environ 20 °C.

30. Pneu conforme à la revendication 29, pour lequel le polymère élastomère utilisé dans la production dudit polymère élastomère contenant au moins un groupe fonctionnel est choisi parmi les suivants : cis-1,4-polyisoprène, naturel ou synthétique, 3,4-polyisoprène, polybutadiène, copolymères d'isoprène et d'isobutène, éventuellement halogénés, copolymères de 1,3-butadiène et d'acrylonitrile, copolymères de styrène et de 1,3-butadiène, copolymères de styrène, d'isoprène et de 1,3-butadiène, et copolymères de styrène, de 1,3-butadiène et d'acrylonitrile, ainsi que leurs mélanges.

31. Pneu conforme à l'une des revendications 1 à 28, pour lequel le polymère élastomère utilisé dans la production dudit polymère élastomère contenant au moins un groupe fonctionnel est choisi parmi les polymères élastomères formés d'une ou de plusieurs mono-oléfines, d'un comonomère oléfinique et d'au moins un diène, et les dérivés de tels polymères.

32. Pneu conforme à la revendication 31, pour lequel le polymère élastomère utilisé dans la production dudit polymère élastomère contenant au moins un groupe fonctionnel est choisi parmi les suivants : copolymères d'éthylène, propylène et diène (EPDM), polyisobutène, caoutchoucs butyl et caoutchoucs butyl halogénés, ainsi que leurs mélanges.

33. Pneu conforme à l'une des revendications précédentes, pour lequel ledit matériau inorganique à structure en couches (composant b) est choisi parmi des phyllosilicates, tels les suivants : les smectites comme les montmorillonite, nontronite, beidellite, volkonskoïte, laponite, hectorite, saponite, sauconite, magadite, kenyasite et stevensité, la vermicullite, l'halloysite, la séricite, les oxydes de type aluminate et l'hydrotalcite, ainsi que leurs mélanges.

34. Pneu conforme à la revendication 33, dans lequel ledit matériau inorganique à structure en couches (composant b) est de la montmorillonite.

35. Pneu conforme à l'une des revendications précédentes, dans lequel ledit matériau inorganique à structure en couches (composant b) a été traité avec un agent de compatibilisation.

36. Pneu conforme à la revendication 35, pour lequel ledit agent de compatibilisation est choisi parmi les sels d'ammonium quaternaire ou de phosphonium quaternaire, de formule générale (I) : 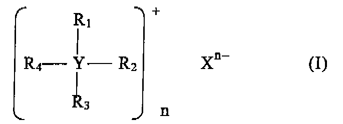 dans laquelle :
- Y représente un atome d'azote ou de phosphore ;
- R₁, R₂, R₃ et R₄ représentent des entités qui peuvent être identiques ou différentes et qui sont chacune :
- un groupe alkyle ou hydroxyalkyle en C₁₋₂₀, linéaire ou ramifié,
- un groupe alcényle ou hydroxyalcényle en C₁₋₂₀, linéaire ou ramifié,
- un groupe symbolisé par -R₅-SH ou -R₅-NH₂, où R₅ représente un groupe alcanediyle en C₁₋₂₀, linéaire ou ramifié,
- un groupe aryle en C₆₋₁₈,
- un groupe aryl-alkyle ou alkyl-aryle en C₇₋₂₀,
- ou un groupe cycloalkyle en C₅₋₁₈, lequel groupe cycloalkyle peut inclure un hétéroatome, tel un atome d'oxygène, d'azote ou de soufre ;
- Xⁿ⁻ représente un anion, tel l'ion chlorure, l'ion sulfate ou l'ion phosphate ;
- et n représente le nombre 1, 2 ou 3.

37. Pneu conforme à l'une des revendications précédentes, pour lequel on a mélangé au préalable, pour en faire un mélange-maître, ledit matériau inorganique à structure en couches et ledit polymère élastomère contenant au moins un groupe fonctionnel.

38. Pneu conforme à la revendication 37, pour lequel on a obtenu ledit mélange-maître selon un procédé qui comporte les étapes suivantes :
- introduire au moins un matériau inorganique à structure en couches et au moins un polymère élastomère contenant au moins un groupe fonctionnel, dans au moins une extrudeuse comportant un fourreau et au moins une vis montée de manière à pouvoir tourner dans ledit fourreau, lequel présente au moins un orifice d'introduction, ainsi qu'un orifice de décharge ;
- malaxer et ramollir ce mélange, pour en faire un mélange-maître ;
- et décharger le mélange-maître obtenu, par l'orifice de décharge.

39. Pneu conforme à la revendication 37, pour lequel on a obtenu ledit mélange-maître selon un procédé qui comporte les étapes suivantes :
- introduire au moins un matériau inorganique à structure en couches, au moins un polymère élastomère et au moins un monomère fonctionnalisé, doté d'au moins une insaturation éthylénique, dans au moins une extrudeuse comportant un fourreau et au moins une vis montée de manière à pouvoir tourner dans ledit fourreau, lequel présente au moins un orifice d'introduction, ainsi qu'un orifice de décharge ;
- malaxer et ramollir ce mélange, pour en faire un mélange-maître ;
- et décharger le mélange-maître obtenu, par l'orifice de décharge.

40. Pneu conforme à l'une des revendications précédentes, dans lequel ladite base élastomère réticulable (composant a) comprend au moins un deuxième polymère élastomère choisi parmi les suivants :
- cis-1,4-poly-isoprène, naturel ou synthétique, 3,4-polyisoprène, polybutadiène, copolymères d'isoprène et d'isobutène, éventuellement halogénés, copolymères de 1,3-butadiène et d'acrylonitrile, copolymères de styrène et de 1,3-butadiène, copolymères de styrène, d'isoprène et de 1,3-butadiène, et copolymères de styrène, de 1,3-butadiène et d'acrylonitrile, ainsi que leurs mélanges ;
- copolymères d'éthylène et propylène (EPR), copolymères d'éthylène, propylène et diène (EPDM), polyisobutène, caoutchoucs butyl et caoutchoucs butyl halogénés, en particulier caoutchoucs chlorobutyl ou bromobutyl, ainsi que leurs mélanges.

41. Pneu conforme à l'une des revendications précédentes, dans lequel ladite composition d'élastomère réticulable comprend au moins un agent de couplage de type silane (composant d).

42. Pneu conforme à la revendication 41, pour lequel ledit agent de couplage de type silane (composant d) est choisi parmi ceux qui comportent au moins un groupe silane hydrolysable et qui peuvent être représentés par la formule générale (II) suivante :
(R)₃Si-CₙH₂ₙ-X (II)
dans laquelle
- les symboles R représentent des entités qui peuvent être identiques ou différentes et qui sont choisies parmi les groupes alkyle, alcoxy et aryloxy et les atomes d'halogène, sous réserve qu'au moins l'une des entités symbolisée par R soit un groupe alcoxy ou aryloxy ;
- l'indice n est un nombre entier qui vaut de 1 à 6, bornes comprises ;
- et X représente un substituant choisi parmi les suivants : nitroso, mercapto, amino, époxy, vinyle, imido, chloro, et ceux symbolisés par -(S)ₘ- CₙH₂ₙ-Si(R)₃ ou -S-C(O)-R où les indices m et n sont des nombres entiers valant de 1 à 6, bornes comprises, et les symboles R ont la signification indiquée ci-dessus.

43. Pneu conforme à la revendication 41 ou 42, pour lequel ledit agent de couplage de type silane (composant d) se trouve présent, dans la composition d'élastomère réticulable, en une proportion de 0 à 10 pcpr.

44. Pneu conçu pour une roue de véhicule, conforme à la revendication 43, pour lequel ledit agent de couplage de type silane (composant d) se trouve présent, dans la composition d'élastomère réticulable, en une proportion de 0,5 à 5 pcpr.

45. Pneu conforme à l'une des revendications précédentes, dans lequel il y a, dans ladite composition d'élastomère réticulable, au moins une charge renforçante supplémentaire, qui se trouve présente en une proportion de 0 à 120 pcpr.

46. Pneu conforme à la revendication 45, dans lequel ladite charge renforçante supplémentaire est de la silice.

47. Pneu conçu pour une roue de véhicule, conforme à la revendication 46, dans lequel se trouve présent au moins un agent de couplage de type silane (composant d), conformément à la revendication 43.

48. Emploi d'une composition d'élastomère réticulable comprenant :
a) une base élastomère réticulable, comprenant au moins 30 pcpr d'au moins un polymère élastomère qui contient de 0,05 à 10 %, en poids rapporté au poids total de ce polymère élastomère, d'au moins un groupe fonctionnel choisi parmi les groupes carboxyle, carboxylate, anhydride et ester,
b) de 2 à 50 pcpr d'au moins un matériau inorganique à structure en couches,
c) et de 0,1 à 120 pcpr d'au moins une charge renforçante de type noir de carbone,
en vue de la fabrication d'un élément de structure d'un pneu, choisi parmi un bourrage sur tringle, un insert de flanc, une sous-couche de bande de roulement et une base de bande de roulement.

49. Emploi conforme à la revendication 48, pour lequel ladite base élastomère réticulable comprend de 50 à 100 pcpr d'au moins un polymère élastomère qui contient de 0,05 à 10 %, en poids rapporté au poids total de ce polymère élastomère, d'au moins un groupe fonctionnel choisi parmi les groupes carboxyle, carboxylate, anhydride et ester.

50. Emploi conforme à la revendication 48 ou 49, pour lequel ledit polymère élastomère contient de 0,1 à 5 %, en poids rapporté au poids total de ce polymère élastomère, d'au moins un groupe fonctionnel choisi parmi les groupes carboxyle, carboxylate, anhydride et ester.

51. Emploi conforme à l'une des revendications 48 à 50, pour lequel ledit matériau inorganique à structure en couches se trouve présent en une proportion de 5 à 30 pcpr.

52. Emploi conforme à l'une des revendications 48 à 51, pour lequel ledit polymère élastomère contenant un groupe fonctionnel est d'un type défini dans l'une des revendications 21 à 32.

53. Emploi conforme à l'une des revendications 48 à 52, pour lequel ledit matériau inorganique à structure en couches est d'un type défini dans l'une des revendications 33 à 34.

54. Emploi conforme à la revendication 53, pour lequel ledit matériau inorganique à structure en couches est ajouté tel quel.

55. Emploi conforme à la revendication 53, pour lequel ledit matériau inorganique à structure en couches est ajouté après avoir subi un traitement effectué au moyen d'un agent de compatibilisation du type défini dans la revendication 36.

56. Emploi conforme à l'une des revendications 48 à 55, pour lequel on a mélangé au préalable, pour en faire un mélange-maître, ledit matériau inorganique à structure en couches et ledit polymère élastomère contenant au moins un groupe fonctionnel.

57. Emploi conforme à la revendication 56, pour lequel ledit mélange-maître a été obtenu conformément à la revendication 38 ou 39.

58. Emploi conforme à l'une des revendications 48 à 57, pour lequel ladite base élastomère réticulable (composant a) comprend au moins un deuxième polymère élastomère, tel que défini dans la revendication 40.

59. Emploi conforme à l'une des revendications 48 à 58, pour lequel ladite composition d'élastomère réticulable comprend au moins un agent de couplage de type silane (composant d), défini dans l'une des revendications 41 à 44.

60. Emploi conforme à l'une des revendications 48 à 59, pour lequel au moins une charge renforçante supplémentaire se trouve présente en une proportion de 0 à 120 pcpr.

61. Emploi conforme à la revendication 60, pour lequel ladite charge renforçante supplémentaire est de la silice.

62. Emploi conforme à la revendication 60, pour lequel se trouve présent au moins un agent de couplage de type silane (composant d), conformément à l'une des revendications 42 à 44.

63. Emploi d'une composition d'élastomère réticulable, définie dans l'une des revendications 48 à 62, en vue d'améliorer les propriétés mécaniques et/ou la dureté d'un élément de structure d'un pneu, choisi parmi un bourrage sur tringle, un insert de flanc, une sous-couche de bande de roulement et une base de bande de roulement.
